(19) Europäisches Patentamt
European Patent Office
Office européen des brevets

(11) **EP 3 500 903 B1**

(12) **EUROPEAN PATENT SPECIFICATION**

(45) Date of publication and mention
of the grant of the patent:
**28.04.2021 Bulletin 2021/17**

(21) Application number: **16922690.9**

(22) Date of filing: **01.12.2016**

(51) Int Cl.:
***G05D 1/10*** *(2006.01)*

(86) International application number:
**PCT/CN2016/108228**

(87) International publication number:
**WO 2018/098775 (07.06.2018 Gazette 2018/23)**

(54) **SYSTEMS AND METHODS OF UNMANNED AERIAL VEHICLE FLIGHT RESTRICTION FOR STATIONARY AND MOVING OBJECTS**

SYSTEME UND VERFAHREN ZUR FLUGBEGRENZUNG VON UNBEMANNTEN LUFTFAHRZEUGEN FÜR STATIONÄRE UND BEWEGTE OBJEKTE

SYSTÈMES ET PROCÉDÉS DE RESTRICTION DE VOL DE VÉHICULE AÉRIEN SANS PILOTE POUR DES OBJETS FIXES ET MOBILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2019 Bulletin 2019/26**

(73) Proprietor: **SZ DJI Technology Co., Ltd.**
**Shenzhen, Guangdong 518057 (CN)**

(72) Inventors:
• **YANG, Bingzhen**
**Shenzhen, Guangdong 518057 (CN)**
• **ZHANG, Guofang**
**Shenzhen, Guangdong 518057 (CN)**
• **WANG, Tao**
**Shenzhen, Guangdong 518057 (CN)**
• **GENG, Chang**
**Shenzhen, Guangdong 518057 (CN)**

(74) Representative: **Appelt, Christian W.**
**Boehmert & Boehmert**
**Anwaltspartnerschaft mbB**
**Pettenkoferstrasse 22**
**80336 München (DE)**

(56) References cited:
**WO-A1-2016/154936          CN-A- 104 881 023**
**CN-A- 104 932 525          CN-A- 105 247 593**
**CN-A- 106 020 223          CN-U- 205 353 778**
**US-A1- 2016 240 087**

**Description**

**BACKGROUND OF THE INVENTION**

Aerial vehicles such as unmanned aerial vehicles (UAVs) can be used for performing surveillance, reconnaissance, and exploration tasks for military and civilian applications. Such vehicles may carry a payload configured to perform a specific function.

The air traffic control of every country (e.g., the Federal Aviation Association (FAA) in the United States) has various regulations for airspace near stationary objects (e.g., airports or other buildings or regions) or moving objects. For example, within a certain distance of an airport, all UAVs are prohibited from flying, no matter what altitude or range of the UAV. That is to say, it is illegal to fly UAVs within a certain distance of an airport because of safety concerns. There may be similar restrictions near sensitive buildings such as nuclear plants.

WO 2016/154936 A1 describes an authentication system that may be used to confirm UAV and/or user identity and provide secured communications between users and UAVs. The UAVs may operate in accordance with a set of flight regulations. The set of flight regulations may be associated with a geo-fencing device in the vicinity of the UAV.

**SUMMARY OF THE INVENTION**

A need exists for improved systems and methods for unmanned aerial vehicle (UAV) flight restrictions and control. A further need exists for dynamic flight restriction for UAVs to avoid moving objects. UAV flight restriction systems may be implemented on based on a geographical position signal. However, the accuracy of a geographical position signal is not always guaranteed, regardless of the source of the location signal (GNSS system, public phone network, or ground radar positioning networks). For various stationary objects, it may be challenging to restrict the flight of a UAV by defining stationary flight restriction zones in advance. Similarly, for moving objects, it may be challenging to define corresponding flight restriction zones in advance. Therefore, there is a need to provide a scheme to prevent stationary and moving objects from the dangers posed by UAVs by maintaining at least a flight-restriction distance between them.

In some instances, it may be desirable to control flight of an aerial vehicle, such as a UAV, to permit response to detected flight-restriction regions corresponding to stationary objects (e.g., airports or other buildings) or moving objects (e.g., manned vehicles). Thus, a need exists for improved flight control for flight-restriction regions corresponding to these stationary or moving objects. The present invention provides systems, methods, and devices related to detecting and responding to stationary or moving flight-restriction regions. Relative locations between a UAV and one or more flight-restriction regions (which may correspond to one or more stationary objects and/or moving objects) may be determined. Based on this information, a flight response of the UAV may be implemented, such as landing the UAV immediately, providing some time for the UAV to land, and/or providing an alert or warning of the proximity of the flight-restriction region.

The present invention relates to a method for controlling flight of the unmanned aerial vehicle according to independent claim 1. An aspect of the invention is directed to a method for controlling flight of an unmanned aerial vehicle (UAV), said method comprising: obtaining information about a location of an object of interest; calculating, during operation of the UAV, a flight-restriction distance for the UAV to maintain relative to the object of interest, wherein the flight-restriction distance is calculated based on a safety factor, wherein the safety factor is determined based on an object classification wherein the object classification is indicative of a movement characteristic of the object of interest (102, 600), and wherein a greater value to the safety factor results in a greater flight-restricted distance; and controlling the UAV to maintain at least the flight-restriction distance relative to the object of interest. Preferred embodiments are described in dependent claims 2 to 14.

The present invention also relates to an apparatus for controlling flight of the unmanned aerial vehicle according to independent claim 15. An aspect of the invention is directed to an apparatus for controlling flight of an unmanned aerial vehicle (UAV), said apparatus comprising one or more processors configured to: obtain information about a location of an object of interest; calculate, during operation of the UAV, a flight-restriction distance for the UAV to maintain relative to the object of interest, wherein the flight-restriction distance is calculated based on a safety factor, wherein the safety factor is determined based on an object classification wherein the object classification is indicative of a movement characteristic of the object of interest (102, 600), and wherein a greater value to the safety factor results in a greater flight-restricted distance; and generate instructions that control the UAV to maintain at least the flight-restriction distance relative to the object of interest.

In an embodiment, the object classification is indicative of a type of objects of interest. The type of objects of interest is selected from a plurality of types of objects of interest. The plurality of types of objects of interest comprises stationary objects and moving objects. The plurality of types of objects of interest comprises types of structures or types of vehicles.

In an embodiment, the safety factor is provided as a value, which corresponds to the object of interest's speed capability.

In an embodiment, the object of interest classification is indicative of a level of priority associated with the object of interest. The safety factor is provided as a value, which corresponds to the level of priority.

In an embodiment, the flight-restriction distance is calculated as a weighted combination of one or more of: (i) a distance safety margin; (ii) a maximum deviation in the UAV's location data; (iii) a maximum deviation in the object of interest's location data; (iv) a required minimum distance between the UAV and the object of interest; and (v) a braking distance needed to stop the UAV. In an embodiment, the weighted combination is calculated based on the safety factor.

In an embodiment, the flight-restriction distance is a vertical distance for the UAV to maintain relative to the object of interest, wherein the safety factor is a vertical safety factor determined based on the object classification. The vertical distance is calculated as a weighted combination of one or more of: (i) a vertical safety margin; (ii) a maximum deviation in the UAV's height data; (iii) a maximum deviation in the object of interest's height data; (iv) a required minimum vertical distance between the UAV and the object of interest; and (v) a vertical braking distance needed to stop the UAV. In an embodiment, the weighted combination is calculated based on the safety factor.

In an embodiment, the flight-restriction distance is indicative of a distance to a boundary of a flight-restriction region surrounding the object of interest. In an embodiment, the boundary of the flight restriction regions surrounding the object of interest is variable.

In an embodiment, the information about the location of the object of interest is broadcast from the object of interest at one or more time points. In an embodiment, the broadcasting is performed by an automatic dependent surveillance - broadcast (ADS-B) system.

In an embodiment, the information about the location of the object of interest comprises one or more of: latitude, longitude, altitude, speed, and direction, said information associated with the location of the object of interest at a time point. In an embodiment, the latitude, longitude, and/or altitude of the object of interest are provided based on information received from one or more of: a global navigation satellite system (GNSS), a mobile communication network, a low-altitude radar system, an altimeter, or a barometer. In an embodiment, the GNSS comprises a global positioning system (GPS), a BeiDou navigation satellite system, a GLONASS navigation satellite system, or a Galileo navigation satellite system.

In an embodiment, the step of calculating is performed by one or more processors on-board the UAV. In an embodiment, the step of calculating is performed by one or more processors off-board the UAV.

In an embodiment, the object of interest is a moving object with a speed relative to the ground.

In an embodiment, the object of interest is a stationary object with substantially zero range of motion.

In an embodiment, operation of the UAV comprises flight of the UAV.

In an embodiment, the step of maintaining at least the flight-restriction distance relative to the object of interest comprises obtaining information about a location of the UAV. In an embodiment, the information about the location of the UAV comprises one or more of: latitude, longitude, altitude, speed, and direction, said information associated with the location of the UAV at a time point. In an embodiment, the latitude, longitude, and/or altitude of the UAV are provided based on information received from one or more of: a global navigation satellite system (GNSS), a mobile communication network, a low-altitude radar system, an altimeter, or a barometer. In an embodiment, the GNSS comprises a global positioning system (GPS), a BeiDou navigation satellite system, a GLONASS navigation satellite system, or a Galileo navigation satellite system.

An aspect of the invention is directed to a method for controlling flight of an unmanned aerial vehicle (UAV), said method comprising: obtaining information about a location of an object of interest;
calculating, during operation of the UAV, a flight-restriction distance for the UAV to maintain relative to the object of interest, wherein the flight-restriction distance is calculated based on (1) a communication delay between the object of interest and the UAV, or (2) a data acquisition delay at the object of interest in providing the information about the location of the object of interest; and controlling the UAV to maintain at least the flight-restriction distance relative to the object of interest.

An aspect of the invention is directed to an apparatus for controlling flight of an unmanned aerial vehicle (UAV), said apparatus comprising: one or more processors configured to: obtaining information about a location of an object of interest; calculating, during operation of the UAV, a flight-restriction distance for the UAV to maintain relative to the object of interest, wherein the flight-restriction distance is calculated based on (1) a communication delay between the object of interest and the UAV, or (2) a data acquisition delay at the object of interest in providing the information about the location of the object of interest; and generate instructions that control the UAV to maintain at least the flight-restriction distance relative to the object of interest.

In an embodiment, the communication delay comprises an amount of time required to transmit information about a location of the object of interest to the UAV. In an embodiment, the amount of time depends on a bandwidth of a communication channel between the object of interest and the UAV through which the information about the location is transmitted. In an embodiment, the data acquisition delay comprises an amount of time required to obtain information about a location of the object of interest. In an embodiment, the amount of time required to obtain the information about the location of the object of interest includes one or more of: an amount of time for a measurement module to measure the parameters of the object of interest, an amount of time for a receiving module to receive external signals, and an amount of time for a control module to decide which parameters are to be broadcast from the object of interest.

In an embodiment, the flight-restriction distance is calculated based on a sum of the communication delay and the data acquisition delay. In an embodiment, the flight-restriction distance is calculated further based on a velocity of the object of interest. In an embodiment, the flight-restriction distance is calculated further based on response time or maneuverability of the UAV. In an embodiment, the flight-restriction distance is calculated further based on a velocity of the UAV. In an embodiment, the flight-restriction distance is calculated further based on a projected direction of travel for the UAV or the object of interest. In an embodiment, the flight-restriction distance is indicative of a distance to a boundary of a flight-restriction region surrounding the object of interest. In an embodiment, the boundary of the flight restriction regions surrounding the object of interest is variable.

In an embodiment, the information about the location of the object of interest is broadcast from the object of interest at one or more time points. In an embodiment, the broadcasting is performed by an automatic dependent surveillance - broadcast (ADS-B) system.

In an embodiment, the information about the location of the object of interest comprises one or more of: latitude, longitude, altitude, speed, and direction, said information associated with the location of the object of interest at a time point.

An aspect of the invention is directed to a method for controlling flight of an unmanned aerial vehicle (UAV), said method comprising: obtaining information about a location of an object of interest; calculating, during operation of the UAV, a flight-restriction distance for the UAV to maintain relative to the object of interest, wherein the flight-restriction distance is calculated based on a deviation estimated between the information about the location of the object of interest and a predetermined range of location of the object of interest; and controlling the UAV to maintain at least the flight-restriction distance relative to the object of interest.

An aspect of the invention is directed to an apparatus for controlling flight of an unmanned aerial vehicle (UAV), said apparatus comprising: one or more processors configured to: obtain information about a location of an object of interest; calculate, during operation of the UAV, a flight-restriction distance for the UAV to maintain relative to the object of interest, wherein the flight-restriction distance is calculated based on a deviation estimated between the information about the location of the object of interest and a predetermined range of location of the object of interest; and generate instructions that control the UAV to maintain at least the flight-restriction distance relative to the object of interest.

In an embodiment, the object of interest is a stationary object with a substantially zero range of location. In an embodiment, the information about the location of the object of interest has a non-zero drift between two or more time points. In an embodiment, the information about the location of the object of interest is indicative of a speed relative to the ground of the stationary object. In an embodiment, the information about the location of the object of interest determines an expectation of a maximum deviation of the information about the apparent location of the object of interest. In an embodiment, the flight-restriction distance is calculated by setting the stationary object's detected speed to zero to differentiate the object of interest from a moving object.

In an embodiment, the object of interest is a moving object with a speed relative to the ground, wherein the speed has a predetermined range of location. In an embodiment, the predetermined range of location of the speed is based on the object of interest's classification. In an embodiment, the predetermined range of location of the speed is based on the object of interest's operational status. In an embodiment, the predetermined range of location of the speed is based on the object of interest's expected flight path. In an embodiment, the information about the location of the object of interest is indicative of an apparent speed of the moving object beyond the predetermined range of location of the speed of the object of interest. In an embodiment, the information about the location of the object of interest determines an expectation of a maximum deviation of the apparent speed of the object of interest. In an embodiment, the flight-restriction distance is calculated by setting the moving object's detected speed to the maximum speed in the predetermined range of location of the speed of the object of interest.

An aspect of the invention is directed to a method for controlling flight of an unmanned aerial vehicle (UAV), said method comprising: obtaining an indication of loss of communication with the object of interest; calculating a predicted path of the object of interest based on previously acquired information about one or more locations of the object of interest; updating, during the operation of the UAV, a flight-restriction distance for the UAV to maintain relative to the object of interest, based on the predicted path of the object of interest; and controlling the UAV to maintain at least the flight-restriction distance relative to the object of interest.

An aspect of the invention is directed to an apparatus for controlling flight of an unmanned aerial vehicle (UAV), said apparatus comprising: one or more processors configured to: obtain an indication of loss of communication with the object of interest; calculate a predicted path of the object of interest based on previously acquired information about one or more locations of the object of interest; update, during the operation of the UAV, a flight-restriction distance for the UAV to maintain relative to the object of interest, based on the predicted path of the object of interest; and generate instructions that control the UAV to maintain at least the flight-restriction distance relative to the object of interest.

In an embodiment, the location of the unmanned aerial vehicle can be assessed with aid of a GPS signal at the unmanned aerial vehicle. The location of the flight-restriction region can be assessed by accessing a local memory of unmanned aerial vehicle which includes locations for one or more flight-restriction regions (e.g., airports). The local memory may be updated with the locations of one or more flight-restriction regions when the unmanned aerial vehicle communicates with an external device via a wired or wireless connection. In some instances, the local memory is updated with the locations of one or more flight-restriction regions when the unmanned aerial vehicle communicates with a communication network.

The flight-restriction region may be a stationary object (e.g., airport or other building) or a moving object (e.g., a plane, a train, a car, or other manned or unmanned vehicle).

Various aspects of the invention described herein may be applied to any of the particular applications set forth below or for any other types of moving objects. Any description herein of aerial vehicles, such as unmanned aerial vehicles, may apply to and be used for any moving object, such as any vehicle. Additionally, the systems, devices, and methods disclosed herein in the context of aerial motion (e.g., flight) may also be applied in the context of other types of motion, such as movement on the ground or on water, underwater motion, or motion in space. Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

## BRIEF DESCRIPTION OF THE DRAWINGS

The novel features of the disclosure are set forth with particularity in the appended claims. A better understanding of the features and advantages of the present disclosure will be obtained by reference to the following detailed description that sets forth illustrative embodiments, in which the principles of the disclosure are utilized, and the accompanying drawings (also "Figure" and "FIG." herein), of which:

FIG. 1 illustrates an example of a flight-restriction region of a UAV, in accordance with an embodiment of the invention.
FIG. 2 illustrates an object-based unmanned aerial vehicle (UAV) flight restriction system, in accordance with an embodiment of the invention.
FIG. 3 illustrates an object-based unmanned aerial vehicle (UAV) flight restriction system, in accordance with another embodiment of the invention.
FIG. 4 illustrates examples of flight-restriction distances a UAV from another UAV, a manned vehicle, and a stationary object, in accordance with an embodiment of the invention.
FIG. 5 shows examples of delay times in communications between an object of interest and a UAV, in accordance with an embodiment of the invention.
FIG. 6 illustrates an example of a flight-restriction distance and altitude of a UAV from an object of interest moving away from the UAV, in accordance with an embodiment of the invention.
FIG. 7 illustrates an example of a predicted flight-restriction region of a UAV during loss of communication, in accordance with an embodiment of the invention.
FIG. 8 shows a computer control system that is programmed or otherwise configured to implement methods provided herein.
FIG. 9 illustrates an unmanned aerial vehicle (UAV), in accordance with an embodiment of the invention.
FIG. 10 illustrates a UAV, including a carrier and a payload, performing wireless communication with an object of interest.
FIG. 11 illustrates a schematic by way of block diagram of a system for controlling a UAV, in accordance with an embodiment of the invention.

## DETAILED DESCRIPTION OF THE INVENTION

Systems, methods, and devices are provided for flight control for an aerial vehicle in response to flight-restriction regions corresponding to one or more stationary or moving objects. The aerial vehicle may be an unmanned aerial vehicle (UAV). Flight of the UAV may be controlled to continually comply with restrictions of the flight-restriction regions corresponding to these objects of interest.

A geographical position, a height, a speed, a direction, an identity or type information of a stationary object or a moving object may be determined. Such information may be conveyed to a UAV. For example, a UAV may receive a wireless message transmitted from the stationary object or moving object. The flight restriction zones of a UAV can be generated and updated by combining real-time information of a stationary object or moving object with a UAV's position, speed, height, maximum flight speed, and other information. Flight restriction algorithms may generate a flight restriction distance that may define a boundary of a flight restriction zone.

The flight restriction distance may be determined based on a number of factors, such as timing factors. Timing factors may include time that an object of interest may need to determine and/or transmit information, timing of transmission from an object of interest to a UAV, and timing of processes that may occur on-board a UAV. The flight restriction distance may take in one or more safety factors into account, which may depend on characteristics of the object of interest and/or moving object. These considerations may provide a more controlled way of creating a flight restriction region. Advantageously, flight restriction regions may be dynamic to take into account up-to-date information about the object of interest and/or the UAV. This may provide improved safety qualifications while still allowing a UAV a reasonable degree of freedom.

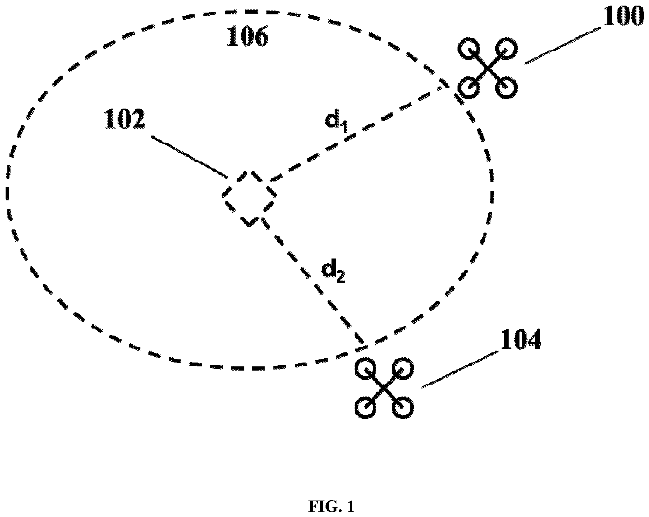

**FIG. 1** shows an example of a flight restriction region in accordance with embodiments of the invention. An object of interest **102** may be provided. Flight of one or more UAVs **100, 104** may be controlled relative to the object of interest. In some embodiments, a flight restriction distance $d_1, d_2$ may be provided. The UAV may be required to maintain at least the flight restriction distance away from the object of interest. In some embodiments, flight-restriction distances may define a flight-restriction zone **106** for the object of interest.

An object of interest **102** may be a stationary object or a moving object. The object of interest may be stationary or moving relative to a reference frame. The reference frame can be a relatively fixed reference frame (e.g., the surrounding environment, or earth). Alternatively, the reference frame can be a moving reference frame (e.g., a moving vehicle). The UAV may continuously maintain flight control in order to avoid the object of interest (e.g., avoid a collision).

A stationary object may be non-moving. The stationary object may have a moving speed of substantially zero in latitude, longitude, and altitude (e.g., V = 0). The stationary object may have a linear velocity, linear acceleration, angular velocity, and/or angular acceleration of zero. The stationary object may be stationary with respect to an inertial frame. An inertial frame may be an environment within which the object of interest is disposed. The inertial reference frame may be the Earth. A stationary object may be affixed with respect to the inertial reference frame. Alternatively, the stationary object may be capable of moving relative to the inertial reference frame, but may be non-moving at the moment. In some embodiments, a stationary object may not be capable of moving on its own power. The stationary object may require aid of another object in order to move. A stationary object may remain substantially stationary within an environment. Examples of stationary objects may include, but are not limited to landscape features (e.g., trees, plants, mountains, hills, rivers, streams, creeks, valleys, boulders, rocks, etc.) or manmade features (e.g., structures, buildings, roads, bridges, poles, fences, unmoving vehicles, signs, lights, etc.). Stationary objects may include large objects of interest or small objects of interest. In some instances, the stationary object may correspond to a selected portion of a structure or physical item.

A moving object may move with respect to one, two, or three axes. The moving object may move linearly with respect to one, two, or three axes, and/or may rotate about one, two or three axes. The axes may orthogonal to one another. The axes may include a yaw, pitch, and/or roll axis. The axes may be along a latitude, longitude, and/or altitude direction. The moving object may have a moving speed that is non-zero (e.g., $V \neq 0$). The moving speed may be non-zero with respect to one, two or three axes. The moving object may move with respect to an inertial reference frame. A moving object may be capable of moving with respect to the inertial reference frame. The moving object may actually be in motion with respect to the inertial reference frame. The moving object may be capable of moving on its own power. The moving object may be capable of self-propulsion.

A moving object may be capable of moving within the environment. The moving object may always be in motion, or may be at motions for portions of a time. For example, the moving object may be a car that may stop at a red light and then resume motion, or may be a train that may stop at a station and then resume motion. The moving object may move in a fairly steady direction or may change direction. The moving object may move in the air, on land, underground, on or in the water, and/or in space. The moving object may be a living moving object (e.g., human, animal) or a non-living moving object (e.g., moving vehicle, moving machinery, object blowing in wind or carried by water, object carried by living target). Moving objects may be large objects of interest or small objects of interest. A moving object may be any object of interest configured to move within any suitable environment, such as in air (e.g., a fixed-wing aircraft, a rotary-wing aircraft, or an aircraft having neither fixed wings nor rotary wings), in water (e.g., a ship or a submarine), on ground (e.g., a motor vehicle, such as a car, truck, bus, van, motorcycle; a movable structure or frame such as a stick, fishing pole; or a train), under the ground (e.g., a subway), in space (e.g., a spaceplane, a satellite, or a probe), or any combination of these environments.

A moving object may be capable of moving freely within the environment with respect to six degrees of freedom (e.g., three degrees of freedom in translation and three degrees of freedom in rotation). Alternatively, the movement of the moving object can be constrained with respect to one or more degrees of freedom, such as by a predetermined path, track, or orientation. The movement can be actuated by any suitable actuation mechanism, such as an engine or a motor. The actuation mechanism of the moving object can be powered by any suitable energy source, such as electrical energy, magnetic energy, solar energy, wind energy, gravitational energy, chemical energy, nuclear energy, or any suitable combination thereof. The moving object may be self-propelled via a propulsion system, such as described further below. The propulsion system may optionally run on an energy source, such as electrical energy, magnetic energy, solar energy, wind energy, gravitational energy, chemical energy, nuclear energy, or any suitable combination thereof.

In some instances, the moving object can be a vehicle, such as a remotely controlled vehicle. Suitable vehicles may include water vehicles, aerial vehicles, space vehicles, or ground vehicles. For example, aerial vehicles may be fixed-wing aircraft (e.g., airplane, gliders), rotary-wing aircraft (e.g., helicopters, rotorcraft), aircraft having both fixed wings and rotary wings, or aircraft having neither (e.g., blimps, hot air balloons). A vehicle can be self-propelled, such as self-propelled through the air, on or in water, in space, or on or under the ground. A self-propelled vehicle can utilize a propulsion system, such as a propulsion system including one or more engines, motors, wheels, axles, magnets, rotors, propellers, blades, nozzles, or any suitable combination thereof. In some instances, the propulsion system can be used to enable the moving object to take off from a surface, land on a surface, maintain its current position and/or orientation (e.g., hover), change orientation, and/or change position.

The object of interest may be live subjects such as people or animals and/or a vehicle carrying the live subjects, e.g., a limousine carrying a president or other government official, or a car carrying a VIP. The live subjects can include people or animals. For example, the object of interest may be an important person, such as a government official. The object of interest may be a person of specialized status. In some embodiments, a person of specialized status may experience elevated security risks and/or precautions.

In various embodiments, the object of interest may include a passive object or an active object. An active object may be configured to transmit information about the object of interest, such as the object of interest's GPS location. The information may be transmitted to a UAV, server, or any other type of external device. Information may be transmitted via wireless communication from a communication unit of the active target to a communication unit of the external device, such as a UAV. A passive object is not configured to transmit information about the object of interest.

An object of interest be at a region or area within an environment. The object of interest may be a physical item within an environment. The object of interest may or may not be visually distinguishable from its surroundings. An object of interest may be any natural or man-made objects or structures such geographical landscapes (e.g., mountains, vegetation, valleys, lakes, or rivers), buildings, vehicles (e.g., aircrafts, ships, cars, trucks, buses, vans, or motorcycle). An object of interest may be an active object or may be associated or affixed to an active object.

An object of interest may be a beacon that may provide information about an object. The object of interest may have an associated beacon that may be integral to the object of interest, may be affixed to the object of interest, or may be separable from the object of interest. The beacon may be removably attached to the object of interest, or may be a completely separate from the object of interest. The beacon may be the object of interest, and vice versa. The beacon may be provided at the same location or separate location as the object of interest.

An object of interest may have an associated flight-restriction region **106.** An object of interest may be within the associated flight-restriction region. The flight-restriction region may encompass the object of interest. The object of interest may be a physical location, or a structure, landmark, feature, transportable item, vehicle, or any other type of object. An object of interest may comprise, or be placed at, one or more locations such as, but not limited to, airports, flight corridors, military or other government facilities, locations near sensitive personnel (e.g., when the President or other leader is visiting a location), vehicles carrying sensitive personnel or cargo, nuclear sites, research facilities, private airspace, de-militarized zones, certain jurisdictions (e.g., townships, cities, counties, states/provinces, countries, bodies of water or other natural landmarks), national borders (e.g., the border between the U.S. and Mexico), or other types of no-fly zones. Associated flight-restriction regions may be provided accordingly. In some embodiments, an active object, such as a beacon, may transmit information that is used to determine a flight-restriction region.

A UAV **100, 104** may be prevented from entering a flight-restriction region **106.** Any description herein of a UAV may apply to any type of aerial vehicle, or any other type of moving object, or vice versa. A UAV may be capable of traversing an environment. The UAV may be capable of flight within three dimensions. The UAV may be capable of spatial translation along one, two, or three axes. The one, two or three axes may be orthogonal to one another. The axes may be along a pitch, yaw, and/or roll axis. The UAV may be capable of rotation about one, two, or three axes. The one, two, or three axes may be orthogonal to one another. The axes may be a pitch, yaw, and/or roll axis. The UAV may be capable of movement along up to 6 degrees of freedom. The UAV may include one, two or more propulsion units that may aid the UAV in movement. The propulsion units may be configured to generate lift for the UAV. The propulsion units may include rotors. The moving object may be a multi-rotor UAV.

The UAV may have any physical configuration. For instance, the UAV may have a central body with one or arms or branches extending from the central body. The arms may extend laterally or radially from the central body. The arms may be movable relative to the central body or may be stationary relative to the central body. The arms may support one or more propulsion units. For instance, each arm may support one, two or more propulsion units.

The UAV may have a housing. The housing may be formed from a single integral piece, two integral pieces, or multiple pieces. The housing may include a cavity within where one or more components are disposed. The components may be electrical components, such as a flight controller, one or more processors, one or more memory storage units, one or more sensors (e.g., one or more inertial sensors or any other type of sensor described elsewhere herein), one or more navigational units (e.g., a global positioning system (GPS) unit), one or more communication units, or any other type of component.

The one or more sensors may include one or more types of sensors. Some examples of types of sensors may include location sensors (e.g., global positioning system (GPS) sensors, mobile device transmitters enabling location triangulation), vision sensors (e.g., imaging devices capable of detecting visible, infrared, or ultraviolet light, such as cameras), proximity or range sensors (e.g., ultrasonic sensors, lidar, time-of-flight or depth cameras), inertial sensors (e.g., accelerometers, gyroscopes, and/or gravity detection sensors, which may form inertial measurement units (IMUs)), altitude sensors, attitude sensors (e.g., compasses), pressure sensors (e.g., barometers), temperature sensors, humidity sensors, vibration sensors, audio sensors (e.g., microphones), and/or field sensors (e.g., magnetometers, electromagnetic sensors, radio sensors). The housing may have a single cavity or multiple cavities. In some instances, a flight controller may in communication with one or more propulsion units and/or may control operation of the one or more propulsion units. The flight controller may communicate and/or control operation of the one or more propulsion units with aid of one or more electronic speed control (ESC) modules. The flight controller may communicate with the ESC modules to control operation of the propulsion units.

The one or more communication units may be any type of communication unit. The communication units may be capable of receiving and/or transmitting wireless signals. The communication units may be capable of receiving wireless signals directly from the object of interest, or through a network. The communication units may be capable of receiving signals from a server that may receive information from the object of interest, or through a network (e.g., cloud computing infrastructure) that may receive information from the object of interest. In some embodiments, one-way communications may be provided from the object of interest to the UAV, or vice versa. Otherwise, two-way communications may be provided.

In some embodiments, the UAV may be configured to support a payload using a carrier. The payload may include one or more imaging devices. The carrier may permit the payload to move relative to the UAV. For instance, the carrier may permit the payload to rotate about one, two, three or more rotational axes. In another instance, the carrier may permit the payload to move linearly along one, two, three, or more axes. The axes for the rotational or translational movement may or may not be orthogonal to each other. The relative movement can be a translation with respect to one or more degrees of freedom (e.g., along one, two, or three axes) and/or a rotation with respect to one or more degrees of freedom (e.g., about one, two, or three axes), or any suitable combination thereof. The one, two, or three axes may be any combination of a pitch axis, yaw axis, or a roll axis. The carrier may include a one-axis gimbal, two-axis gimbal, or three-axis gimbal.

The UAV may be capable of manually-controlled flight, semi-autonomous flight, or autonomous flight. In some embodiments, one or more autonomous actions of the UAV may supersede manually controlled flight, or previously instructions for semi-autonomous or autonomous flight. For example, a UAV may be forced to remain outside of a flight-restriction zone. The UAV may be forced to take action when approaching a flight restriction zone, or when close to a flight-restriction zone. For example, the UAV may be forced to alter the UAV's path to remain outside the flight-restriction zone. The UAV may be forced to maintain at least a flight-restriction distance away from an object of interest. The UAV may fly at a flight-restriction distance, or any distance greater than the flight-restriction distance, away from the object of interest. A UAV may not be permitted to fly within a flight-restriction distance of an object of interest. If the UAV is within the flight-restriction distance of the object of interest, the UAV may be forced to land, hover, or increase the UAV's distance until the UAV is at least as far away from the object of interest as the flight-restriction distance. If the UAV is on the ground within the flight-restriction distance of the object of interest, the UAV may be prevented from taking off. If the object of interest moves away so that the UAV is subsequently further than the flight-restriction distance from the object of interest, the UAV may then be allowed to take off. Such autonomous flight responses are provided by way of example only, and additional flight responses by the UAV may be possible.

The UAV may be prevented from entering the flight-restriction region by being forced to maintain at least a certain flight-restriction distance $d_1$, $d_2$ away from the object of interest. The flight-restriction distance may depend on a characteristic of the object of interest (e.g., object classification, object movement, timing for the object of interest to process and/or transmit information), a characteristic of the UAV (e.g., UAV classification, UAV movement, UAV physical specifications, timing for the UAV to process received information, timing for the UAV to respond), a characteristic of communications between the UAV and the object of interest (e.g., timing for information to be transmitted from the object of interest to the UAV), and/or any other situational characteristics (e.g., environmental conditions such as weather).

For example, a first UAV **100** may be required to maintain at least a distance $d_1$ from the object of interest **102**. A second UAV **104** may be required to maintain at least a distance $d_2$ from the object of interest **102**. The distances $d_1$, $d_2$ may be the same or may be different from one another. The distances may differ depending on a characteristic of the UAV. For example, the first UAV may have a slower flight controller than the second UAV, and may be required to keep a greater distance away from the object of interest than the second UAV.

In another example, the flight-restriction region around the object of interest need to be a circle. For instance, when approaching from a first direction, a UAV **100** may be required to maintain at least a distance $d_1$ from the object of interest. When approaching from a second direction, the UAV **104** may be required to maintain at least a distance $d_2$ from the object of interest. Thus, depending on circumstances, for the same object of interest-UAV pair, the flight-restriction distances may differ. Alternatively, they may be the same. When considering the flight-restriction distance around the UAV in all directions (e.g., 360 degrees around the UAV), a flight-restriction region may be defined by the flight-restriction distances around the UAV. The flight-restriction distances around the UAV may define a boundary of the flight-restriction region. In some embodiments, the flight-restriction distances may be determined in a lateral direction. The flight-restriction distances may be determined in a vertical direction and/or a combination of lateral and/or vertical direction. The flight-restriction distances around the UAV in lateral and/or vertical directions may define a flight-restriction space. Any description herein of a flight-restriction region may apply to a three-dimensional flight-restriction space.

The flight-restriction distance may change over time. In some embodiments, the flight-restriction distance may be updated periodically (e.g., at least as frequently as every few minutes, every minute, every few seconds, every second, every few tenths of a second, every tenth of a second, every hundredth of a second, every milliseconds), continuously in real-time, and/or in response to one or more events. Examples of one or more events may include, but are not limited to, detected action by a UAV, a request by a UAV, a detected action by the object of interest, a request by the object of interest, a request from a third party device (e.g., server, remote controller), or an event associated with a communication system. Alternatively, the flight-restriction distance may remain the same and not change over time.

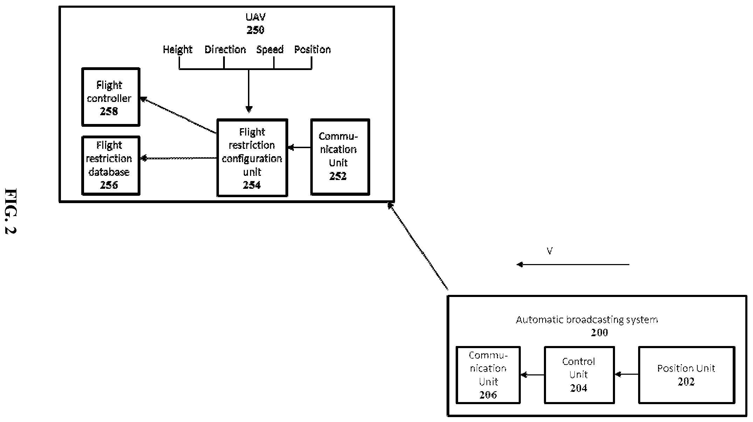

An example of a flight restriction environment is shown in **FIG. 2.** The flight-restriction environment may comprise an automatic broadcasting system **200** and a UAV **250.** The automatic broadcasting system may comprise a location unit **202,** a control unit **204,** and/or a communication unit **206.** The UAV may comprise a communication unit **252,** a flight-restriction configuration unit **254,** and/or a flight-restriction database **256.**

As previously described, an object of interest may comprise a beacon, may be physically or operably coupled to the beacon, or may be the beacon itself. The beacon may be an automatic broadcasting system **200.** The beacon may broadcast information widely and wirelessly. The beacon may broadcast information so that it may be received by untargeted recipients of any type that may be capable of detecting information broadcast in a particular manner (e.g., particular frequency). Alternatively, the beacon may transmit information in a targeted manner so that only intended recipients may receive the information. The information may or may not be encrypted. Any description herein of an automatic broadcasting system may apply to any type of beacon or object of interest that may transmit information.

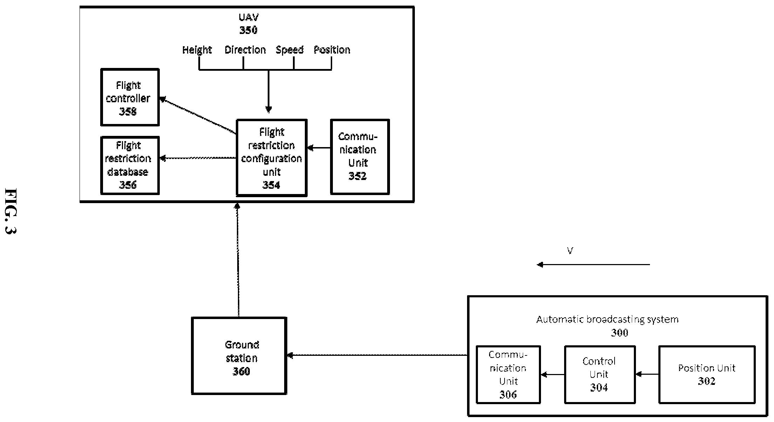

In one embodiment, a flight-restriction environment may be provided by a commercial airline, the commercial airliner providing one or more signals (e.g., data) which can be pushed to the UAV as necessary. The data may be pushed continuously or only when the UAV is within a certain range of the automatic broadcasting system (e.g., on the commercial airline) for security purposes. When data is pushed to the UAV, the UAV may execute one or more appropriate flight control responses as necessary (e.g., stop moving forward or land). An example of this type of flight restriction environment is shown in **FIG. 3.**

**FIG. 3** illustrates a flight-restriction environment similar to that of **FIG. 2,** except for an additional ground station **360.** The commercial airliner may establish a communication link with the ground station and send signal data to the ground station. The ground station **360** may in turn push data to the UAV if predetermined condition is satisfied (e.g., the UAV is in range of the ground station). All other components of **FIG. 3** (e.g., automatic broadcasting station **300,** position unit **302,** control unit **304,** communication unit **306,** UAV **350,** communication unit **352,** flight-restriction configuration unit **354,** flight-restriction database **356,** and flight controller **358**) may perform functions in the same manner as their respective counterparts in FIG. 2 (e.g., automatic broadcasting station 200, position unit 202, control unit 204, communication unit **206,** UAV **250,** communication unit **252,** flight-restriction configuration unit **254,** flight-restriction database **256,** and flight controller **258,** respectively).

One or more objects of interest may be configured with an automatic broadcasting system 200, which may broadcast information. The information may comprise one or more parameters of the object of interest. Parameters of the object of interest may include, but are not limited to, a unique identity of the object of interest, an object type or classification, one or more physical characteristics of the object of interest, such as whether the object of interest is capable of motion, types of movements and/or speeds that the object of interest is capable of, or any specialized status of an individual associated with the object of interest or with the object of interest itself. The information can comprise location and/or movement information of the object of interest. The information of the object of interest may be provided on a periodic basis, in real-time, and/or in response to an event. The location and/or movement information may reflect the most up-to-date information about the object of interest. The location and/or movement information may reflect information within a predetermined period of time. The predetermined period of time may be a time period most recent (e.g., closest in time) to a moment at which a flight-restriction distance is being calculated. The location and/or movement information may comprise the last known location, velocity, direction, direction of velocity vector, acceleration, direction of acceleration vector received from an object of interest within the predetermined period of time. The location and/or movement information may include, but is not limited to, latitude, longitude, altitude, orientation with respect to a pitch, yaw, or roll axis, linear speed, angular speed, linear acceleration, angular acceleration, direction, time, or other information. The location and/or movement information may be determined with aid of a location unit **202.** The location unit may comprise a global positioning system (GPS) unit that may determine geospatial coordinates of the object of interest. The positioning unit may comprise one or more inertial sensors, such as one or more accelerometers, gyroscopes, magnetometers, or any other type of sensor that may aid in detecting motion of the object of interest (e.g., linear and/or angular motion). The location unit may utilize images, infrared signals, radio signals, and/or any other type of information in providing location and/or movement information of the object of interest. The location unit may receive information from outside the object of interest (e.g., satellites, external sensors), and/or information that is self-contained to the object of interest (e.g., from inertial sensors).

The location unit may perform functions of receiving or measuring data (e.g., information about the associated object of interest). The location unit may comprise a receiving module and/or a measurement module. The data receiving module may receive an external signal (e.g., from a GPS receiver, a communication network receiving module (e.g., SIM card), a satellite data receiving module) in real-time. The measurement module may measure one or more parameters of the object of interest (e.g., accelerometer, gyroscope, compass, barometer, pitot / speed meter). Different parameters may be measured and received for different objects of interest; hence, the data receiving and measuring module can be automatically or manually adjusted based on a type of the object of interest.

For UAVs, the necessary information may be provided from an automatic broadcasting system **200** (e.g., an automatic dependent surveillance-broadcast (ADS-B) system). The information (e.g., position or altitude information) of objects of interest acquired by the object of interest's location unit may be manually or automatically set. For instance information from a stationary object can be manually set, such that some or all of the information sent from the object of interest's communication unit **206** may be a set of statically defined values (e.g., spatial coordinates). The manual setting may be performed by a user of the object of interest (e.g., a building manager). For instance information from a moving object can be automatically set, such that some or all of the information sent from the object of interest's communication unit **206** may be acquired from one or more sensors. For example, the position or altitude information of moving objects can be received from a GNSS system (such as GPS, BeiDou system, Glonass, Galileo), a mobile communication network, a low-altitude radar, etc. The object of interest information may then be passed to the object of interest's control unit **204** and broadcast by the object of interest's communication unit **206** to the UAV's communication unit **252** through a communication channel.

The control unit **204** may receive information from the location unit **202.** After data is collected at the location unit, the control unit may decide which of the information will be broadcast. The control unit may comprise one or more processors that may individually or collectively make the determination. The control unit may receive a portion or all of the information acquired by the location unit. The control unit may receive information from the location unit at regularly scheduled time intervals (e.g., 100 milliseconds (ms), one second (s), 10 s, one minute (min), 10 min, 30 min, one hour (hr), several hr, 12 hr, 24 hr, or several days).

The control unit **204** may receive information from the location unit **202** corresponding to a set of one or more sensors. For each sensor in the set, such information may be collected at the same time or at different times. For instance location data may be transmitted at longer time intervals from sensors that need a relatively long time to acquire data (e.g., from a GNSS network) compared to sensors that need a relatively short time to acquire data (e.g., an accelerometer on-board the UAV). The time intervals may be adjusted based on a type of the object of interest or a parameter of the object of interest. For instance time intervals may be shorter (e.g., more frequent communication of data) for a moving object than a stationary object. For instance time intervals may be shorter for a moving object of a type with a faster maximum speed (e.g., an airplane, a train, or a car) than a moving object of a type with a slower maximum speed (e.g., a UAV or a bicycle). For instance time intervals may be shorter for a fast moving object than a slow moving object. For instance time intervals may be shorter for a moving object at higher altitude than a moving object at a lower altitude. In general, shorter time intervals may enable more frequent communication of data, which may be appropriate in cases where greater protection from the chance of collision between the UAV and the object of interest may be desired.

The control unit **204** can perform data fusion and calculation on sensor data as received or parameters, in order to obtain the one or more parameters to be broadcast. For instance location data could be directly acquired (e.g., from a GNSS such as GPS) or indirectly calculated on sensor data by the control unit (e.g., using location data from a previous time point and velocity and/or accelerometer data). This approach could conserve power consumption rate by using increased time intervals for some types of information or parameters that may be power-intensive (e.g., GNSS) to perform each data acquisition compared to other types of information or parameters that may be less power-intensive to acquire (e.g. data from an accelerometer or a compass). Alternatively, this approach could conserve power consumption rate by using increased time intervals for some types of information or parameters that may be slow to acquire compared to other types of information or parameters that may be faster to acquire. Sensor data may be associated with the location of the object of interest at a time point, and may comprise latitude, longitude, altitude, speed, or direction. Sensor data or parameters may be received from one or more of: a global navigation satellite system (GNSS), a mobile communication network, a low-altitude radar system, an altimeter, or a barometer. In an embodiment, the GNSS comprises a global positioning system (GPS), a BeiDou navigation satellite system, a GLONASS navigation satellite system, or a Galileo navigation satellite system.

The automatic broadcasting system may comprise a communication unit **206.** The communication unit may transmit the information from the control unit **204.** The information may be transmitted wirelessly. The communication unit may be configured for one-way communication from the automatic broadcasting system, and may be capable of transmitting information. Communication unit may be configured for two-way communication, and may be capable of both transmitting and receiving information.

The information may be transmitted directly to the UAV **250.** The information may be received directly by the UAV without going through any intermediary device. In some embodiments, Bluetooth, infrared, WiFi, or other types of signals may be used to transmit the information. The information may be transmitted indirectly to the UAV. The information may be received indirectly by the UAV by going through one or more intermediary devices. Examples of other intermediary device may include, but are not limited to, routers, communication towers, satellites, other objects, other UAVs, servers, and/or any other types of devices. Indirect communications may comprise communications over wide area networks (WAN) such as the Internet, local area networks (LAN), or telecommunications networks, such as 3G, 4G, or LTE communications.

The UAV **250** may receive and process the information from the automatic broadcasting system **200,** and determine a flight-restriction region and/or distance for the object of interest based on the all or a subset of the information. The flight-restriction region and/or distance may be determined based on information about the UAV itself. The flight-restriction region and/or distance may be determined based on information about the communication between the automatic broadcasting system and the UAV. The flight-restriction region and/or distance information may depend on timing components as discussed in greater detail elsewhere herein.

The UAV may comprise a communication unit **252** that may receive the information from the automatic broadcasting system. The communication unit may be configured for one-way communication for receiving information, and may be capable of receiving information from the automatic broadcasting system. The communication unit may be configured for two-way communication, and may be capable of both transmitting and receiving information.

The UAV may comprise a flight-restriction configuration unit **254.** The flight-restriction configuration unit may be on-board the UAV and/or off-board the UAV (e.g., on a remote control communicatively linked to the UAV). The flight-restriction configuration unit may comprise one or more processors that may individually or collectively aid in determining a flight-restriction region and/or distance for the object of interest. The flight-restriction configuration unit may use at least some of the information received from the communication unit **252** in determining a flight-restriction region and/or distance.

The flight-restriction configuration unit may include information about the UAV in making the determination. For example, the information about the UAV may include a characteristic of the UAV, such as UAV classification, UAV movement, UAV physical specifications, timing for the UAV to process received information, timing for the UAV to respond. A UAV classification may refer to a type of UAV, such as a make or model of the UAV. The brand of UAV may be considered. The UAV classification make take into account a design of the UAV, a propulsion system of the UAV, size of the UAV, navigation system of the UAV, communication of the UAV. The UAV classification may be selected from a plurality of available UAV classifications. UAV movement may include UAV speed, direction, rotation, acceleration, and/or location. The UAV movement may take into account a projected trajectory of the UAV. The UAV movement may take into account past movement by the UAV during the current flight session of the UAV or previous flight sessions. UAV physical specifications may include maneuverability of the UAV, braking speed of the UAV, turning radius of the UAV, or other physical specifications of the UAV. Timing for the UAV to process information may depend on processing speed of one or more processors on-board the UAV. The speed at which a flight controller and/or flight-restriction configuration unit may operate may affect the timing for the UAV to process information. The communication unit of the UAV may also affect the timing for the UAV to process information. The timing for the UAV to respond may depend on the timing for the UAV to process received information and/or UAV physical specifications.

A flight-restriction region can be a two-dimensional (2-D) flight-restriction region (or flight-restriction area), or a three-dimensional (3-D) flight-restriction region (or flight-restriction volume). A 2-D flight-restriction region (or flight-restriction area) may be determined based on latitude and longitude information about the object of interest. For example, coordinates, such as latitude and longitude coordinates may be used. A 3-D flight-restriction region (or flight restriction volume) may be determined based on latitude, longitude, and altitude information of the object of interest. For example, spatial coordinates, such as latitude, longitude, and altitude coordinates may be used. Parameter measurements may differ for different operation modes or status of a UAV.

The flight-restriction configuration unit may also make a determination as to the type of flight-response by a UAV **250** in one or more scenarios. The flight-restriction configuration unit may specify one or more types of flight-response by the UAV when the UAV is approaching or within a flight-restriction distance. The type of flight response may depend on the circumstances of the UAV and/or the object of interest. Further examples are provided in greater detail elsewhere herein.

The flight-restriction configuration unit may be on-board the UAV **250.** In alternative embodiments, one or more of the functions of the flight-restriction configuration units may be performed off-board the UAV. For example, one or more of the functions of the flight-restriction configuration units may be performed at a device (e.g., server, remote controller) remote to the UAV and/or the object of interest. The device may receive information from the automated broadcasting system and/or the UAV to perform the functions. In another example, one or more of the functions of the flight-restriction configuration units may be performed using a network (e.g., cloud computing infrastructure). Information from the automated broadcasting system and/or the UAV may be provided to the network (e.g., cloud) to perform the functions. In an additional example, one or more functions of the flight-restriction configuration units may be performed on-board the object of interest. Information may be provided from the UAV to allow the object of interest to perform the functions. Any device that performs one or more functions of the flight-restriction configuration units may send information to the UAV.

The UAV may comprise a flight controller **258**. The flight controller **258** may generate one or more signals that may control one or more propulsion units of the UAV. The flight controller may comprise one or more processors that may individually or collectively generate the signals that may be used to control the one or more propulsion units. The flight controller **258** may generate the signals based on information generated by the flight-restriction configuration unit. The flight controller **258** and the flight-restriction configuration unit may or may not share one or more processors.

The UAV **250** may comprise a flight-restriction database **256**. The flight-restriction database may comprise one or more memory storage units that may store flight-restriction information. The memory storage units may allow for local storage of flight-restriction data on the UAV. There may be several benefits of this approach. Flight-restriction data may be quickly and easily accessible as needed by the UAV (e.g., upon request by the UAV's user). The UAV will be less affected by communication delay with external objects. Historical flight-restriction data may be stored on the memory storage units such that the UAV can refer back to flight-restriction data from previous time points (e.g., under different UAV operating conditions).

The flight-restriction data in a flight restriction database **256** may be updated directly by the flight-restriction configuration unit **254**. The flight-restriction configuration unit **254** may have received that data from the communication unit **252**. The communication unit **252** may have received that data from an object of interest's automatic broadcasting system **200**. The flight-restriction data may be associated with flight-restriction regions corresponding to stationary objects (e.g., static flight-restriction regions) and/or moving objects (e.g., moving flight-restriction regions).

The flight-restriction data may be updated by communication with a network (e.g., cloud). Such a cloud network (or another type of network) may comprise flight-restriction data from other UAVs. The information of static flight-restriction regions may be stored in a cloud network (or another type of network). The information of a portion or all of the moving flight-restriction regions may be stored in a network. The UAV can receive the data from the network through a wireless communication protocol (e.g., LTE, SMS, Bluetooth, WiFi) or a wired communication protocol (e.g., USB, USB2, USB3, FireWire). A network may comprise flight-restriction data associated with one or more distinct jurisdictions (e.g., local, national, or international). A UAV's flight restriction database may be updated with flight-restriction data from the network when the UAV moves from one jurisdiction to another (e.g., to be updated with the most recent set of flight-restriction rules associated with the jurisdiction under which the UAV is operating at a current time). Updates of flight-restriction data may be pulled from a network by a UAV in response to certain detected events (e.g., moving across jurisdictions) or according during regularly scheduled intervals (e.g., a daily, weekly, monthly, or annual update). Updates of flight-restriction data may be pushed to a UAV by a network.

Flight-restriction data in a flight-restriction database **256** may comprise a short-term map or a long-term map. A short-term map may include flight-restriction information (e.g., real-time information) associated with presently detected objects of interest (e.g., on the order of the most recent few minutes to several hours). Alternatively, a short-term map may include flight-restriction information associated with objects of interest within a certain range of the UAV. For instance for security reasons, if the object of interest is Air Force One carrying the president, the object of interest may only broadcast flight-restriction information if the UAV is within a certain range. A long-term map may include flight-restriction information associated with stationary objects or features (e.g., known buildings such as airport locations, public domain information, etc.).

The flight-restriction database **256** may comprise a set of coordinates (e.g., latitude, longitude, and/or altitude) associated with one or more objects of interest. These objects of interest may comprise those associated with a short-term map (e.g., presently detected objects of interest in proximity) or those associated with a long-term map (e.g., stationary objects or features that are either configured to communicate with a UAV or having a known spatial location). The flight-restriction database **256** may comprise a set of minimum flight-restriction distances (e.g., lateral distance, vertical distance, or true distance) associated with one or more objects of interest. This set of minimum flight-restriction distances could be updated depending on circumstances (e.g. moving across jurisdictions) or timing (e.g. during regularly scheduled intervals). The flight-restriction database **256** may comprise a set of times associated with these flight-restriction distances (e.g., a set of flight-restriction rules that only apply during airport operation hours or business hours of a building). The flight-restriction database **256** may comprise a set of flight responses associated with an operating state (e.g., comprising one or more parameters of the UAV, local environmental conditions, time of day). A flight response may be provided by the flight restriction configuration unit **254,** by the communication unit **252** of the UAV, or by the automatic broadcasting system **200** of an object of interest.

The object of interest may be a moving or stationary object. For example, as illustrated in **FIG. 3,** the object of interest may be moving at a velocity v. The automated broadcasting system may be moving in the same manner as the object of interest, or may be the object of interest itself. The UAV may be required to maintain at least a flight-restriction distance away from the object of interest. The flight-restriction distance may change as the object of interest and/or UAV moves, or may remain substantially the same. The flight-restriction distance may change over time, or may remain substantially the same.

A flight-restriction region may be a static region corresponding to a stationary object. The flight-restriction region may be a 2-D or 3-D flight-restriction region. A UAV may compare its own location relative to the flight-restriction region. Based on the flight-restriction distance and a distance between the UAV and the object of interest, the UAV may perform a flight response. In some embodiments, the UAV may compare its own geo-spatial coordinates with geo-spatial coordinates of the object of interest to calculate the distance between the UAV and the object of interest and/or determine whether the UAV is within a flight-restriction distance. This information may be used to make an assessment of whether the UAV is to take a flight response measure.

For example, a 3-D flight-restriction region may be defined based on GPS coordinates and height of a stationary object (e.g., a non-moving object with a range of motion of substantially zero in latitude, longitude, and altitude). The UAV may compare its own GPS coordinates with the information of the flight-restriction region, and may execute a flight response based on the distance between the UAV and the object of interest. For example, a UAV's flight response may comprise performing a braking operation if it is detected that the UAV is approaching the object of interest. In another example, the UAV's flight response may be to continue flying but veer away from the flight-restriction region. In another example, the UAV's flight response may be to change its speed (e.g., accelerate or decelerate). In another example, the UAV's flight response may be to change its altitude (e.g., fly higher or lower than its current position). In another example, the UAV's flight response may be to change its direction (e.g., make a left turn or a right turn by a certain number of degrees). In another example, the UAV's flight response may be to land (e.g., immediately or to return to a predetermined location). The three-dimensional flight-restriction region may be characterized by restrictions in ranges corresponding to one or more of latitude, longitude, and/or altitude. For example, a UAV may be instructed to maintain at least a flight-restriction region of 10 meters away from a building in all lateral directions, but can fly over the building from its roof. The restrictions in any of the directions (e.g., latitude, longitude, altitude) may be the same or may be different.

A UAV may take a flight response measure when the UAV is approaching or within a flight-restriction region of an object of interest. It may be determined that the UAV is within a flight-restriction region when the UAV is within a flight-restriction distance of the object of interest. Examples of flight response measure may include, but are not limited to, being prevented from taking off from a landed state, being forced to land immediately, being forced to land after a set period of time, being forced to decrease altitude, being forced to increase altitude to a predetermined altitude, hovering, braking, changing flight direction, being forced to auto-return to a pre-set location. In some embodiments, in addition or as an alternative to taking the flight response measure, a user of the UAV may receive a warning. The warning may be indicative of an operational status of the UAV and/or the types of flight-response measures that may be instituted if the user does not avoid the flight-restriction region.

In some embodiments, the flight response measure may be determined based on an operational status of the UAV. Examples of operational status of the UAV may include, the UAV being powered on or powered off, the UAV being in flight or being in a landed state, the UAV being within or outside a flight-restriction region, or the UAV having a projected trajectory that does intersect or does not intersect a flight-restriction region.

**Table 1** illustrates examples of how different flight response measures could be used in response to different examples of operation status of a UAV to generate an appropriate response and/or a warning to the pilot (user) of the UAV.

**Table 1**

| Operation status of a UAV | Operation Steps | Warning |
|---|---|---|
| Before taking off, UAV receives broadcast information and is within flight restriction regions | Taking off is prohibited, or a height of flight is limited | The pilot (user) of UAV received warning via UAV data link |
| During flight, UAV receives broadcast information and is within flight restriction regions | Auto-return, or fast ascending, or exiting flight restriction region by lowest estimate, or landing at it is can be triggered | The pilot (user) of UAV received warning via UAV data link |
| During flight, UAV receives broadcast information and is not within flight restriction regions | Flight of UAV can be regulated as designed | The pilot (user) of UAV received warning via UAV data link |

A flight-restriction distance may be determined for the UAV to maintain relative to an object of interest. The flight-restriction distance may determine a portion of a boundary of a flight-restriction region. If a UAV if within a flight-restriction distance relative to the object of interest for a particular moment in time, the UAV may be within the associated flight-restriction region for that moment in time.

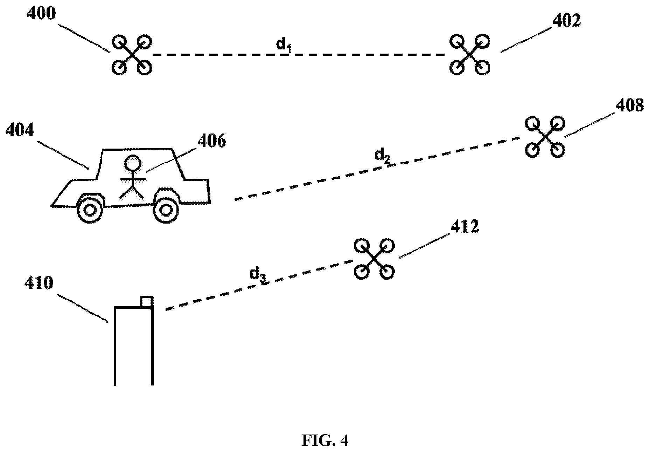

In some embodiments, a flight-restriction distance may depend on one or more physical characteristics of the object of interest (e.g., speed). For instance the object of interest may be a stationary object or a moving object. In some embodiments, the flight-restriction distance may depend on how quickly the object of interest is moving. For example, it may be desirable to have a greater flight-restriction distance relative to an object of interest that is moving, in case the object of interest moves in a way that may bring about a collision. For example, as shown in **FIG. 4,** when an object of interest is another UAV **400,** a UAV **402** may have a flight-restriction distance of at least $d_1$. When an object of interest is a land-bound vehicle **404,** a UAV may have a flight-restriction distance of at least $d_2$. The UAV may be capable of moving more quickly than the land-bound vehicle, which may mean $d_1 > d_2$. When an object of interest is a stationary object, such as a beacon on a building **410,** a UAV may have a flight-restriction distance of at least $d_3$. Since the building is not moving at all, $d_1 > d_3$, and/or $d_2 > d_3$.

In some implementations, the flight-restriction distance may depend on the characteristics of how the object of interest is moving. For example, objects of interest that may have a more erratic characteristic movement, or a greater degree of freedom of motion, may have a greater flight-restriction distance, relative to an object of interest that is a more stable or predictable type of movement, or more restricted types of movement. For example, a UAV **400** may have a greater degree of motion in its flight, or a more unpredictable type of flight path, compared to a land-bound vehicle **404** that may be confined to moving on the ground, and/or along a road. A greater flight-restriction distance may be provided when the object of interest is the UAV, rather than when the object of interest is a land-bound vehicle.

The flight-restriction distance may depend on a direction that the object of interest is moving relative to the UAV. For instance if the object of interest is moving toward the UAV, a greater flight-restriction distance may be provided compared to if the object of interest is moving away from the UAV. This greater flight-restriction distance accounts for the time needed for the UAV to brake (e.g., reduce speed), land (e.g, reduce speed to zero), or change its flight path relative to the object of interest (e.g., to take evasive action to avoid a collision with the object of interest). If the object of interest is moving away the UAV, a smaller flight-restriction distance may be provided, since the UAV is less likely to be required to brake (e.g., reduce speed), land (e.g, reduce speed to zero), or change its flight path relative to the object of interest (e.g., to take evasive action to avoid a collision with the object of interest).

The flight-restriction distance may depend on a classification or priority of an object of interest and/or an associated person **406.** For instance if the object of interest is very important for safety (e.g., an airport) or political reasons (e.g., a government building), a greater flight-restriction distance may be provided compared to if the object of interest is less important (e.g., an office building or a private citizen's home). This greater flight-restriction distance accounts for the time needed for the UAV to brake (e.g., reduce speed), land (e.g, reduce speed to zero), or change its flight path relative to the object of interest (e.g., to take evasive action to avoid a collision with the object of interest).

The flight-restriction distance may depend on how quickly information about the object of interest is collected, processed, and transmitted. For instance if this information takes a significant amount of time relative to the speed of the object of interest (e.g., the object of interest has a high speed relative to the speed of the UAV, such as an aircraft, a train, or a car) or the speed of the UAV (e.g., the UAV is moving at a high speed), a greater flight-restriction distance may be provided compared to if this information takes an insignificant amount of time relative to the speed of the object of interest (e.g., the object of interest does not have a high speed relative to the speed of the UAV, such as a stationary object) or the speed of the UAV (e.g., the UAV is moving at a low speed).

In some embodiments, the flight-restriction distance may depend on one or more characteristics of the UAV (e.g., maximum speed, size, maneuverability, cost for the UAV to take a flight response measure, classification or priority of the UAV, the rate at which information is communicated between the UAV and the object of interest, or the rate at which information is processed at the UAV).

The flight-restriction distance may depend on the maximum speed of the UAV. For instance if the UAV has a high maximum speed, a greater flight-restriction distance may be provided compared to if the UAV has a low maximum speed. This approach assures greater protection in the event of malfunction of the UAV causes unreliable or unpredictable operation.

The flight-restriction distance may depend on the size of the UAV. For instance if the UAV has a large size, a greater flight-restriction distance may be provided compared to if the UAV has a small size. This approach assures greater protection in the event of collision between the UAV and an object of interest, since a heavier UAV is capable of inflicting greater damage and poses greater risk to objects of interest and people.

The flight-restriction distance may depend on the maneuverability of the UAV. For instance if the UAV has a low maneuverability, a greater flight-restriction distance may be provided compared to if the UAV has a high maneuverability. This approach assures greater protection in the event of the sudden appearance of an object of interest or other event which may trigger a flight response for the UAV.

The flight-restriction distance may depend on the cost for the UAV to take a flight response measure. For instance if the UAV is flying at a high altitude or has a low remaining battery capacity, and hence has a high cost to perform a landing response, a greater flight-restriction distance may be provided compared to if the UAV is flying at a low to moderate altitude or has sufficient remaining battery capacity, and hence has a low to moderate cost to perform a landing response.. This approach assures greater protection in the event of a sudden appearance of an object of interest or other event which may trigger a flight response for the UAV.

The flight-restriction distance may depend on the classification or priority of the UAV. For instance if the UAV has a high priority, a greater flight-restriction distance may be provided compared to if the UAV has a low priority. This approach assures greater protection for a UAV against collisions because of the valuable nature of the UAV. The UAV may have high priority because of its high value, its valuable payload, and/or its high-priority passengers or associated user.

The flight-restriction distance may depend on the rate at which information is communicated between the UAV and the object of interest. For instance if the communication between the UAV and the object of interest occurs at a low rate, a greater flight-restriction distance may be provided compared to if the communication between the UAV and the object of interest occurs at a high rate. This approach assures greater protection for a UAV which may have slow communication with the object of interest and hence may need more time to determine a course of action during operation.

The flight-restriction distance may depend on the rate at which information is processed at the UAV. For instance if the UAV processes information at a low rate, a greater flight-restriction distance may be provided compared to if the UAV processes information at a high rate. This approach assures greater protection for a UAV which may have slow performance and hence may need more time to determine a course of action during operation.

The flight-restriction distance may depend on the communication time for the UAV to communicate with the object of interest. For instance if the UAV communicates with the object of interest with a relatively long communication time, a greater flight-restriction distance may be provided compared to if the UAV communicates with the object of interest with a relatively short communication time. For instance a wireless communication link between the UAV and the object of interest may be slow at large distances between the UAV and the object of interest, or if the wireless network experiences network congestion, or if the UAV and the object of interest communicate indirectly through a common network (e.g., a cloud network). The communication time between the UAV and the object of interest may depend on a network latency of a communication network through which information is transmitted. For instance, an amount of time required to transmit information about a location of the object of interest to the UAV may depend on a network latency of the communication network through which the information about the location of the object if interest is transmitted. Network latency may be an expression of the amount of time it may take for a data packet to travel from the object of interest to the UAV or vice versa. Network latency may depend on network congestion, travel path, queuing delay, processing delay, bufferbloat, environmental conditions, signal strength, available bandwidth, or any other factors. This approach assures greater protection for a UAV which may have slow performance and hence may need more time to determine a course of action during operation.

The flight-restriction distance may depend on environmental conditions, e.g. weather. For instance if the UAV is operating in an environment with high wind conditions, a greater flight-restriction distance may be provided due to the possible erratic nature of the UAV's flight. For instance if the UAV is operating in a foggy or similar low-visibility environment, a greater flight-restriction distance may be provided due to the possible unreliable operation of sensors or the possible unreliable detection of the object of interest.

A flight-restriction distance may be generated for a UAV relative to the object of interest. The UAV may keep at a minimum the flight-restriction distance away from the object of interest. In some embodiments, the flight-restriction distance may be generated based on an amount of time for one or more processes that may occur at the object of interest, at the UAV, and/or between the object of interest and/or UAV. The flight-restriction distance may depend on an amount of time for data to be collected and/or processed at the object of interest and/or UAV.

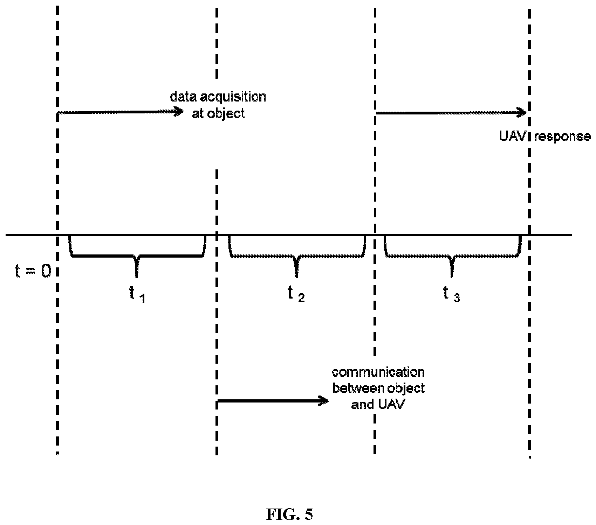

**FIG. 5** shows examples of the different timing components related to communication steps (e.g. data acquisition time, communication time, or calculation time) that may involve the object of interest and/or the UAV. Each of these time components may affect a generated flight-restriction distance. The time components may include an amount of time for data acquisition at an object of interest $(t_1)$. The amount of time for data acquisition at an object of interest may include an amount of time to gather information about the object of interest, such as position information about the object of interest. The amount of time for data acquisition information may include an amount of time for a location unit at an automated broadcasting system to perform one or more functions.

The amount of time for data acquisition may also include an amount of time for a control unit at an automated broadcasting system to perform one or more functions. The amount of time for data acquisition may include an amount of time to process information collected by the location unit (e.g., a sum of one or more sensor response times) and/or perform any related calculations or determinations (e.g., to process raw data to correct for possible deviations). The amount of time for data acquisition may include an amount of time to select a subset of the raw or processed data from the location unit to be transmitted to the UAV.

The amount of time for data acquisition may include an amount of time for a communication unit to transmit information to the UAV. The communication unit may comprise a transmitter that may take a certain amount of time to prepare and send data.

The amount of time for data acquisition may depend on processing speed of one or more processors on-board the object of interest. For instance, the processing speed of a location unit and/or control unit may depend on a speed of one or more associated processors. The speed of the processors may depend on a type of the processors, a configuration between two or more processors, power consumption requirements or restrictions of the processors (e.g., to preserve battery draw or to allow UAV operation for at least a predetermined amount of time on a fully charged battery). The amount of time for data acquisition may depend on a type of sensor, or the specific sensors used to aid in the collection of location data. In some embodiments, environmental conditions or circumstances may affect the functioning of a sensor. For example, a sensor may comprise a GPS sensor. If there is interference from surrounding structures or due to weather conditions, it may take a longer amount of time for the GPS sensor to collect the coordinates. For example, a sensor may comprise an altimeter. If there is interference from surrounding structures or due to weather conditions, it may take a longer amount of time for the altimeter sensor to collect the altitude location data.

In some embodiments, the amount of time for data acquisition may be on the order of minutes, a single minute, seconds, a single second, tenths of a second, hundredths of a second, milliseconds, or nanoseconds.

The timing components may include an amount of time for communication between an object of interest and the UAV ($t_2$). The amount of time for communication may include an amount of time for one or more of the following: for a communication unit (e.g., of the UAV or the object of interest) to initialize a communication channel (e.g., a wireless communication network), for a communication unit (e.g., of the UAV or the object of interest) to initialize a communication channel with a cloud network, for a communication unit (e.g., of the object of interest) to send one or more pieces of information to the UAV, for a communication unit (e.g., of the object of interest) to terminate a communication channel, or for a communication unit (e.g., of the UAV or the object of interest) to re-establish a communication channel in the event of a disruption in communication (e.g. power failure of the UAV or the object of interest, environmental conditions such as inclement weather, an error in normal UAV operation, an error in normal object operation, or a user error).

The timing components may include an amount of time for a UAV response ($t_3$). An amount of time for a UAV response may include an amount of time for a communication unit of the UAV to receive and convey information from the object of interest.

The amount of time for the UAV response ($t_3$) may include an amount of time for a UAV to calculate a flight-restriction distance and/or flight-restriction region. The amount of time for the UAV to perform such calculations may be determined based on previous amounts of times where the UAV has performed such calculations. The amount of time for the UAV to perform such calculations may be an estimated time for the UAV to perform such calculations based on one or more parameters of one or more components of the UAV. For instance the amount of time for the UAV to perform such calculations may be increased at extreme temperatures (e.g., at a high end or low end of the operating temperature range of the UAV) due to instability of processors, communication, network, or other similar components.

The amount of time for the UAV response ($t_3$) may include a predicted amount of time for a UAV to complete a flight response measure. This flight response measure may comprise braking (e.g., reducing speed), accelerating (e.g., increasing speed), altering direction (e.g., to maneuver around an object of interest or obstacle), or landing (e.g., reducing speed to zero). For instance the amount of time for the UAV to perform a braking operation may depend on the initial speed before braking and desired final speed after braking. For instance the amount of time for the UAV to land may depend on the initial speed before landing and the distance between the UAV and the desired landing location. The flight response time may depend on the specifications of the UAV (e.g., maneuverability). The flight response time may depend on environmental conditions (e.g., may be larger for inclement weather conditions such as high wind or foggy or other low-visibility conditions).

The timing components may include a weighted sum of two or more of the amount of time for data acquisition at an object of interest, the amount of time for communication between the object of interest and the UAV, and/or the amount of time for the UAV response. In some embodiments, the timing components may include a weighted sum where each of these types of amount of time are weighted equally. Alternatively, different weights may be used for one or more of these types of amount of time. For instance weights may be related to a safety factor to account for variability or deviations in an expected type of amount of time (e.g., higher weights for more variable expected types of amount of time).

The amount of time for data acquisition at an object of interest may be determined by a clock, processor, or other timing unit. This timing unit may be on the object of interest, on the UAV, on a cloud network, or on a computer device in communication with the object of interest or UAV (e.g., computer, mobile phone, or satellite). The amount of time for data acquisition may be determined by subtracting the time stamp (e.g., from a timing unit) at which a piece of data is received (e.g., from a sensor) from the time stamp (e.g., from a timing unit) at which a piece of data is requested. The difference in times indicated by the time stamps is the delay due to data acquisition. A timing unit (e.g., on the object of interest or on the UAV) may periodically synchronize its clock with another timing unit (e.g., on a cloud network or on a computer device).

The amount of time for communication between an object of interest and a UAV may be determined by a clock, processor, or other timing unit. This timing unit may be on the object of interest, on the UAV, on a cloud network, or on a computer device in communication with the object of interest or UAV (e.g., computer, mobile phone, or satellite). The amount of time for communication between an object of interest and a UAV may be determined by subtracting the time stamp (e.g., from a timing unit) at which communication was finished from the time stamp (e.g., from a timing unit) at which communication was initiated. The difference in times indicated by the time stamps is the delay due to communication between the object of interest and the UAV. A timing unit (e.g., on the object of interest or on the UAV) may periodically synchronize its clock with another timing unit (e.g., on a cloud network or on a computer device).

The amount of time for a UAV response may be determined by a clock, processor, or other timing unit. This timing unit may be on the UAV, on a cloud network, or on a computer device in communication with the UAV (e.g., computer, mobile phone, or satellite). The amount of time for a UAV response may be determined by subtracting the time stamp (e.g., from a timing unit) at which the UAV finished performing the requested response from the time stamp (e.g., from a timing unit) at which the UAV initiated the response. The difference in times indicated by the time stamps is the delay due to UAV response. A timing unit (e.g., on the UAV) may periodically synchronize its clock with another timing unit (e.g., on a cloud network or on a computer device).

In one example, a flight-restriction distance of a UAV relative to an object of interest can be calculated as:

$$(1) \quad \mathbf{L_{limit}} = \mathbf{L_{safety}} + \mathbf{L_{max\_deviation\_UA}} + \mathbf{L_{max\_deviation\_object}} + \mathbf{L_{brake\_h}} + \mathbf{L_{min}}$$

wherein $L_{limit}$ is a flight-restriction distance of a UAV under current flying speed;

$L_{max\_deviation\_UA}$ is a maximum deviation in the UAV's location data;

$L_{max\_deviation\_object}$ is a maximum deviation in the stationary object's location data;

$L_{safety}$ is a safety margin;

$L_{min}$ is a required minimum distance between the UAV and the object of interest; and

$L_{brake\_h}$ is a distance needed to stop the UAV. This object of interest may be a stationary object.

$L_{limit}$ is a flight-restriction distance of a UAV relative to an object of interest, such that the UAV is directed to maintain a separation distance of at least the flight-restriction distance from the object of interest. This separation distance may be a lateral distance, as given by a distance between the UAV's location on the ground and the object of interest's location on the ground. This separation distance may be a true distance, calculated by a distance between the UAV's 3-D spatial coordinate location (e.g., latitude, longitude, and altitude) and the object of interest's 3-D spatial coordinate location (e.g., latitude, longitude, and altitude).

$L_{max\_deviation\_UA}$ is a maximum deviation in the UAV's location data. This deviation may be calculated as a range of values, measured under typical operating conditions of the UAV, corresponding to a difference between a UAV's measured location data and its true spatial location. This spatial location may be a 2-D spatial coordinate location (e.g., latitude and longitude). This spatial location may be a 3-D spatial coordinate location (e.g., latitude, longitude, and altitude). The maximum deviation in the UAV's location data may be the maximum value of this range of values corresponding to a difference between the UAV's measured location data and its true spatial location.

$L_{max\_deviation\_object}$ is a maximum deviation in the object of interest's location data. This deviation may be calculated as a range of values, measured under typical operating conditions of the object of interest, corresponding to a difference between an object of interest's measured location data and its true spatial location. This spatial location may be a 2-D spatial coordinate location (e.g., latitude and longitude). This spatial location may be a 3-D spatial coordinate location (e.g., latitude, longitude, and altitude). The maximum deviation in the object of interest's location data may be the maximum value of this range of values corresponding to a difference between the object of interest's measured location data and its true spatial location.

$L_{safety}$ is a safety margin. This safety margin may be zero. This safety margin may be predetermined for the UAV. This safety margin may be calculated based on the UAV's operation mode and/or one or more parameters (e.g., speed). This safety margin may be increased as the UAV's speed increases. This safety margin may be predetermined for the object of interest. This safety margin may be calculated based on one or more parameters of the object of interest (e.g., speed). This safety margin may be increased as the object of interest's speed increases.

$L_{min}$ is a required minimum distance between the UAV and the object of interest. This required minimum distance may be zero. This required minimum distance may be a predetermined value set by the UAV. This required minimum distance may be a predetermined value set by the object of interest. This required minimum distance may be a predetermined value set by one or more jurisdictional (e.g., local, national, or international) laws under which the UAV is bound. This required minimum distance may be a predetermined value set by one or more jurisdictional laws (e.g., local, national, or international) under which the object of interest is bound.

$L_{brake\_h}$ is a distance needed to stop the UAV. This distance may be zero, e.g., if the UAV is flying away from the object of interest.

$L_{limit}$ may be calculated as a sum of two or more of these factors. $L_{limit}$ may be calculated as a weighted sum of two or more of these factors. A weight of the weighted sum may be a predetermined value. A weight of the weighted sum may be a value determined by a characteristic of the object of interest.

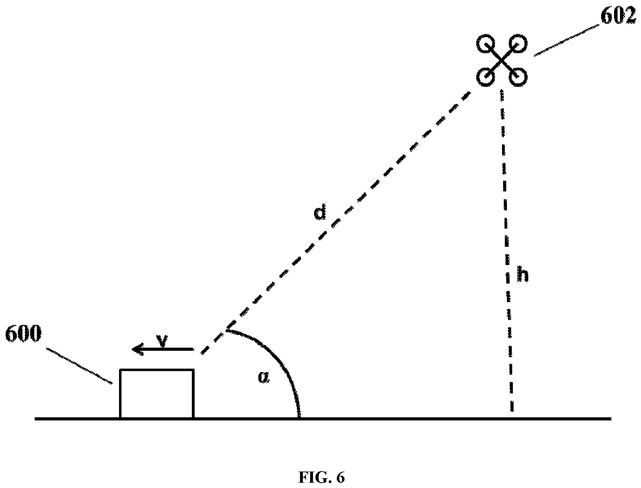

FIG. 6 illustrates a UAV **602** that maintains at least a flight-restriction distance away from an object of interest **600**. The object of interest **600** may be a stationary object (e.g. **v** = 0) or a moving object (e.g. **v** > 0). At a given time point, the UAV is located at a true distance **d** away from the object of interest, at a height of **h** above the object of interest, at an angle of $\alpha$ between the incidence vector (e.g., directed from the UAV to the object of interest) and the horizontal plane. Given a value of $L_{limit}$, the UAV's flight operation may be controlled such that the distance of **d** is maintained at least the value of $L_{limit}$ (e.g., **d** > $L_{limit}$). If the object of interest is a moving object, then the values of distance **d**, angle $\alpha$, and $L_{limit}$ may be changing over time. This situation may require that the UAV's flight operation be continuously monitored and controlled to maintain the flight-restriction distance.

When a lowest height limit applies to a stationary object, and the UAV is allowed to fly no lower than a height, a vertical distance of a UAV relative to a stationary object can be similarly calculated as:

$$(2)\ H_{limit} = H_{safety} + H_{max\_deviation\_UA} + H_{max\_deviation\_object} + H_{brake\_v} + H_{min}$$

wherein $H_{limit}$ is a flight-restriction vertical distance of a UAV under current flying speed;

$H_{max\_deviation\_UA}$ is a maximum deviation in the UAV's altitude location data;

$H_{max\_deviation\_object}$ is a maximum deviation in the stationary object's altitude location data;

$H_{safety}$ is a height safety margin;

$H_{min}$ is a required minimum vertical distance between the UAV and the object of interest; and

$H_{brake\_h}$ is a vertical distance needed to stop the UAV (e.g., zero if the UAV is flying upward and away from the stationary object).

$H_{limit}$ is a flight restriction vertical distance of a UAV relative to an object of interest, such that the UAV is directed to maintain a vertical separation distance of at least the flight restriction vertical distance from the object of interest.

$H_{max\_deviation\_UA}$ is a maximum deviation in the UAV's altitude location data. This deviation may be calculated as a range of values, measured under typical operating conditions of the UAV, corresponding to a difference between a UAV's measured altitude location data and its true altitude. The maximum deviation in the UAV's altitude location data may be the maximum value of this range of values corresponding to a difference between the UAV's measured altitude location data and its true altitude.

$H_{max\_deviation\_object}$ is a maximum deviation in the object of interest's altitude location data. This deviation may be calculated as a range of values, measured under typical operating conditions of the object of interest, corresponding to a difference between an object of interest's measured altitude location data and its true altitude. The maximum deviation in the object of interest's altitude location data may be the maximum value of this range of values corresponding to a difference between the object of interest's measured altitude location data and its true altitude.

$H_{safety}$ is a height safety margin. This height safety margin may be zero. This height safety margin may be predetermined for the UAV. This height safety margin may be calculated based on the UAV's operation mode and/or one or more parameters (e.g., speed). This height safety margin may be increased as the UAV's speed increases. This height safety margin may be predetermined for the object of interest. This height safety margin may be calculated based on one or more parameters of the object of interest (e.g., speed). This height safety margin may be increased as the object of interest's speed increases.

$H_{min}$ is a required minimum vertical distance between the UAV and the object of interest. This required minimum vertical distance may be zero. This required minimum vertical distance may be a predetermined value set by the UAV. This required minimum vertical distance may be a predetermined value set by the object of interest. This required minimum vertical distance may be a predetermined value set by one or more jurisdictional (e.g., local, national, or international) laws under which the UAV is bound. This required minimum vertical distance may be a predetermined value set by one or more jurisdictional laws (e.g., local, national, or international) under which the object of interest is bound.

$H_{brake\_h}$ is a vertical distance needed to stop the UAV. This vertical distance may be zero, e.g., if the UAV is flying away from the object of interest.

$H_{limit}$ may be calculated as a sum of two or more of these factors. $H_{limit}$ may be calculated as a weighted sum of two or more of these factors. A weight of the weighted sum may be a predetermined value. A weight of the weighted sum may be a value determined by a characteristic of the object of interest.

As previously described, an object of interest may be a stationary object or moving object. If the object of interest is a moving object, a flight-restriction region may be moving with the object of interest. For example, a three-dimensional flight-restriction region may be a moving region that may be defined based on a moving object to be avoided. The UAV may be directed to continually maintain at least a flight-restriction distance away from a moving object. To design a flight-restriction region for a moving object, a velocity vector may be added as compared to the approach for design of a flight-restriction region for stationary objects. For example, a UAV can descend to a safe height in a region outside the flight-restriction region when receiving a broadcast signal from a moving object. The flight-restriction region can be defined in consideration of information of low altitude radar or automatic dependent surveillance-broadcast (ADS-B), wide area multilateration (WAM) data.

A moving 2-D or 3-D flight-restriction region may be defined for a moving object to provide protection for the moving object (e.g., a large-scale aircraft), which may have a potential for a collision event with small-scale unmanned aircraft. A moving flight-restriction region may be designed for other types of manned or unmanned vehicles (e.g. ships, automobiles, trains). A moving flight-restriction region may be defined for a moving person (e.g., a VIP individual such as a political, business, or other organization leader).

A 3-D flight-restriction region for a moving object may be generated based on (1) a maximum possible delay $t_1$ in data acquisition (e.g., acquiring the coordinates and velocity direction) from the object of interest to be avoided, (2) a maximum possible delay $t_2$ in communication (e.g., to transmit data) to a UAV, and (3) a response time $t_3$ for the UAV (e.g., to leave the flight-restriction area), and (4) forward velocity $v_1$ of the object of interest.

The flight-restriction distance in forward direction may be calculated as:

$$(3)\ \mathbf{S} = (\mathbf{t_1} + \mathbf{t_2} + \mathbf{t_3}) \times \mathbf{v_1} \times \mathbf{n}$$

where $\mathbf{n}$ is a coefficient and can be adjusted in view of the priority of the object of interest to be avoided. This $\mathbf{n}$ provides a redundant protection by specifying a safety factor.

If the moving object is performing a non-linear movement (e.g., changing direction of movement by turning), then the flight-restriction distance may be calculated as:

$$S2 = v_1 \times (t_1 + t_2 + t_3 - w/\alpha) \times n$$

where $\alpha$ is an angle between the UAV and the flight direction of the object of interest, and w is an angular velocity of the object of interest in changing the direction. **FIG. 6** illustrates an example of a flight-restriction distance and altitude of a UAV from an object of interest moving away from the UAV, in accordance with an embodiment of the invention. This flight-restriction distance may be determined for all directions of the object of interest, to accommodate cases in which the system does not timely detect a velocity change of the object of interest.

A safety factor $\mathbf{n}$ may be used to adjust the flight-restriction distance based on a number of safety considerations. A greater value to the safety factor will result in a greater flight-restriction distance. The safety considerations may include classification of the object of interest, for example a classification chosen from: a UAV, a commercial aircraft, a private aircraft, a freight train, a passenger train, a bus, a freight truck, a fire engine, an ambulance, a car or similar vehicle, a bicycle, a person, an airport, a nuclear facility, a shopping mall, a department store, a grocery store, a restaurant.. For instance, the safety factor can be provided as a value based on the classification of the object of interest. The safety factor may be larger when the level of priority of the object of interest is higher (e.g., an airport or a government building) than when the level of priority of the object of interest is lower (e.g., an office building or a private citizen's home). The safety factor may be larger when the object of interest is a moving person. The safety factor may be larger when the moving person is of high priority (e.g., a VIP individual such as a political, business, or other organization leader) than when the moving person is of lower priority (e.g., one or more private citizens).

If the angular velocity of the object of interest is very small, resulting in a very small or even a negative S2, then the flight-restriction distance should be at least $\mathbf{n}$ times the length 1 of the object of interest. Illustrative examples of calculations to determine a flight-restriction region of a moving object are provided in Examples 1 and 2.

Example 1

An automobile, which carries a VIP, travels at a speed of 20 meters per second (m/s) forward. The safety factor $\mathbf{n}$ is 5. The maximum possible delay in acquiring the coordinates of the automobile is 500 milliseconds (ms). The maximum possible delay in transmitting data to the UAV is 100 ms. The velocity of the UAV is 5 m/s. The response time for UAV is 7 seconds (s) (e.g., respond in 2 s, brake in 2 s, and leave in 3 s).

The flight-restriction distance in a forward direction relative to the automobile's movement is S = 20 × 7.6 × 5 = 760 meters (m).

If the automobile changes its direction at an angular velocity of 30 degrees per second, then the flight-restriction distance at a position which forms an angle a with respect to the moving direction of the automobile is S2 = 20 × (7.6 - α / 30) × 5.

The flight-restriction distance in the backward direction is 160 m.

Example 2

A civil aircraft, having a length of 40 m, is descending in a downward direction of -15 degrees at a velocity of 200 m/s. The safety factor **n** is 4. The delay in acquiring the ADS0-B data is 100 ms. The delay in the UAV data link is 100 ms. The velocity of the UAV is 5 m/s. The response time for UAV is 12 s (e.g., respond in 2 s, brake in 2 s, and leave in 8 s).

Then the flight-restriction distance in a downward direction of -15 degrees is:

$$S = 200 \times 12.3 \times 4 = 9840 \text{ s.}$$

If the angular velocity of the civil aircraft in pitch direction is 4 degrees / s, and the maximum yaw velocity of the civil aircraft is 10 degrees / s, then the flight-restriction distance in a horizontal direction and vertical direction in 3-D space (e.g., volume) can be accordingly calculated.

Since a long time is needed for the aircraft to turn around, the flight-restriction distance in the backward direction of the aircraft is 160 m, which is three times the length of the aircraft.

If loss of communication is experienced (e.g., between the UAV and an object of interest), for instance if a network or broadcast signal is lost, then the moving direction and velocity of a moving object can be predicted. For instance if the object of interest is a commercial aircraft, it is not likely for a commercial aircraft to deviate from the scheduled path, therefore the moving direction and velocity of the commercial aircraft can be continuously predicted by referring to the scheduled path. Similarly if the object of interest is a train, the object of interest is almost certainly not going to deviate from the scheduled path, thereby the moving direction and velocity can be continuously predicted over time in the event of detected communication loss or interruption. For instance if the moving object is a civil aircraft, the civil aircraft may have a chance of deviating from the scheduled path (e.g., either intentional due to pilot control or unintentional due to aircraft malfunction or weather conditions), which may necessitate the increasing of the safety factor in the event of detected communication loss or interruption. For instance if the moving object is a car, the car's scheduled path may be predicted from a GPS navigation unit configured by the driver of the car.

One or more parameters may also be estimated in the event of loss of signal or malfunction of one or more sensors. For instance if an altimeter signal is temporarily lost, such location data may be acquired instead through GNSS. For instance if location data from GNSS is temporarily lost, such location data may be indirectly calculated through a combination of previous location data, velocity data, accelerometer data, and/or compass data.

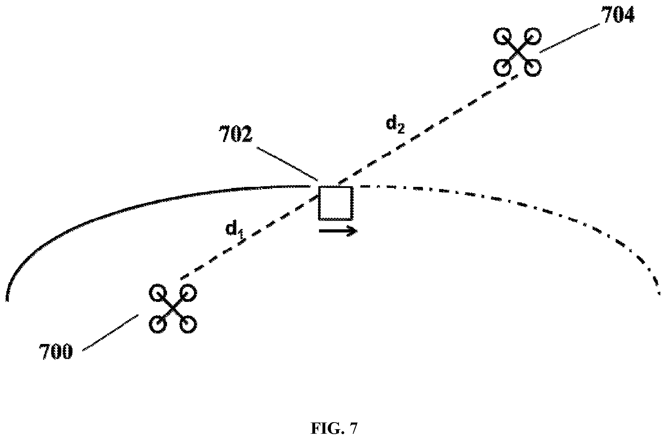

FIG. 7 illustrates an example of a predicted flight-restriction region of a UAV during loss of communication between a UAV and an object of interest, in accordance with an embodiment of the invention. A UAV **700** may maintain at least a flight-restriction distance $d_1$ from a moving object **702,** said moving object having a velocity away from the UAV. A UAV **704** may maintain at least a flight-restriction distance $d_2$ from a moving object **702,** said moving object having a velocity toward the UAV. The moving object **702** may be moving in a predefined or predictable trajectory (e.g., as shown by the solid curve), such that the trajectory can be estimated or predicted (e.g., as shown by the dashed curve) after a loss or interruption of communication is detected.

**Computer Control Systems**

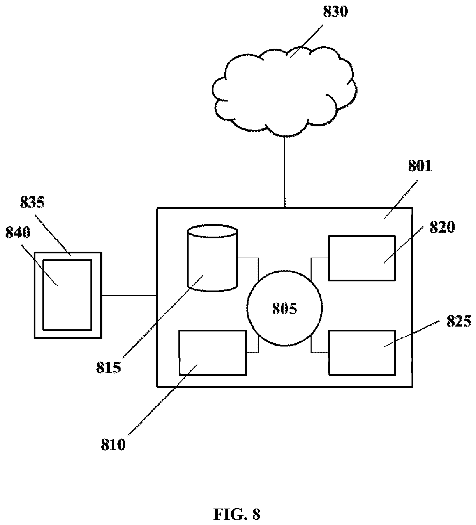

Computer control systems are provided that are programmed to implement methods of the disclosure. **FIG. 8** shows a computer system **801** that is programmed or otherwise configured to implement methods for controlling flight of a UAV. The computer system **801** can regulate various aspects of the present disclosure, such as, for example, methods for controlling flight of a UAV. The computer system **801** can be an electronic device of a user or a computer system that is remotely located with respect to the electronic device. The electronic device can be a mobile electronic device.

The computer system **801** includes a central processing unit (CPU, also "processor" and "computer processor" herein) **805,** which can be a single core or multi core processor, or a plurality of processors for parallel processing. The computer system **801** also includes memory or memory location **810** (e.g., random-access memory, read-only memory, flash memory), electronic storage unit **815** (e.g., hard disk), communication interface **820** (e.g., network adapter) for communicating with one or more other systems, and peripheral devices **825,** such as cache, other memory, data storage and/or electronic display adapters. The memory **810,** storage unit **815,** interface **820** and peripheral devices **825** are in communication with the CPU 705 through a communication bus (solid lines), such as a motherboard. The storage unit **815** can be a data storage unit (or data repository) for storing data. The computer system **801** can be operatively coupled to a computer network ("network") **830** with the aid of the communication interface **820.** The network **830** can be the Internet, an internet and/or extranet, or an intranet and/or extranet that is in communication with the Internet. The network **830** in some cases is a telecommunication and/or data network. The network **830** can include one or more computer servers, which can enable distributed computing, such as cloud computing. The network **830,** in some cases with the aid of the computer system **801,** can implement a peer-to-peer network, which may enable devices coupled to the computer system **801** to behave as a client or a server.

The CPU **805** can execute a sequence of machine-readable instructions, which can be embodied in a program or software. The instructions may be stored in a memory location, such as the memory **810.** The instructions can be directed to the CPU 705, which can subsequently program or otherwise configure the CPU **805** to implement methods of the present disclosure. Examples of operations performed by the CPU **805** can include fetch, decode, execute, and writeback.

The CPU **805** can be part of a circuit, such as an integrated circuit. One or more other components of the system **801** can be included in the circuit. The CPU may be integrated into an object of interest, on-board an object of interest, integrated into a UAV, on-board a UAV, or part of a communication channel (e.g., cloud network). In some cases, the circuit is an application specific integrated circuit (ASIC).

The storage unit **815** can store files, such as drivers, libraries and saved programs. The storage unit **815** can store user data, e.g., user preferences and user programs. The computer system **801** in some cases can include one or more additional data storage units that are external to the computer system **801,** such as located on a remote server that is in communication with the computer system **801** through an intranet or the Internet. The storage unit may be integrated into an object of interest, on-board an object of interest, integrated into a UAV, on-board a UAV, or part of a communication channel (e.g., cloud network). The storage unit may store a flight-restriction database.

The computer system **801** can communicate with one or more remote computer systems through the network **830.** For instance, the computer system **801** can communicate with a remote computer system of a user. Examples of remote computer systems include personal computers (e.g., portable PC), slate or tablet PC's (e.g., Apple® iPad, Samsung® Galaxy Tab), telephones, Smart phones (e.g., Apple® iPhone, Android-enabled device, Blackberry®), or personal digital assistants. The user can access the computer system **801** via the network **830.** The network may comprise a wireless communication network (e.g., a cloud network).

Methods as described herein can be implemented by way of machine (e.g., computer processor) executable code stored on an electronic storage location of the computer system **801,** such as, for example, on the memory **810** or electronic storage unit **815.** The machine executable or machine readable code can be provided in the form of software (e.g., a computer software or a mobile application such as cell phone app). During use, the code can be executed by the processor **805.** In some cases, the code can be retrieved from the storage unit **815** and stored on the memory **810** for ready access by the processor **805.** In some situations, the electronic storage unit **815** can be precluded, and machine-executable instructions are stored on memory **810.**

The code can be pre-compiled and configured for use with a machine having a processer adapted to execute the code, or can be compiled during runtime. The code can be supplied in a programming language that can be selected to enable the code to execute in a pre-compiled or as-compiled fashion.

Aspects of the systems and methods provided herein, such as the computer system **801,** can be embodied in programming. Various aspects of the technology may be thought of as "products" or "articles of manufacture" typically in the form of machine (or processor) executable code and/or associated data that is carried on or embodied in a type of machine readable medium. Machine-executable code can be stored on an electronic storage unit, such as memory (e.g., read-only memory, random-access memory, flash memory) or a hard disk. "Storage" type media can include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer into the computer platform of an application server. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium, such as computer-executable code, may take many forms, including but not limited to, a tangible storage medium, a carrier wave medium or physical transmission medium. Non-volatile storage media include, for example, optical or magnetic disks, such as any of the storage devices in any computer(s) or the like, such as may be used to implement the databases, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The computer system **801** can include or be in communication with an electronic display **835** that comprises a user interface (UI) **840** for providing, for example, input parameters for methods of UAV flight restriction for stationary and moving objects. Examples of UIs include, without limitation, a graphical user interface (GUI) and web-based user interface. The UI may be part of a UAV's remote control. The UI may be part of an object of interest and controlled by the object of interest's user.

Methods and systems of the present disclosure can be implemented by way of one or more algorithms. An algorithm can be implemented by way of software upon execution by the central processing unit **805**. The algorithm can, for example, control flight of a UAV. *UAVs*

The systems, devices, and methods described herein can be applied to a wide variety of moving objects. As previously mentioned, any description herein of a UAV may apply to and be used for any moving object. Any description herein of a UAV may apply to any aerial vehicle. A moving object of the present invention can be configured to move within any suitable environment, such as in air (e.g., a fixed-wing aircraft, a rotary-wing aircraft, or an aircraft having neither fixed wings nor rotary wings), in water (e.g., a ship or a submarine), on ground (e.g., a motor vehicle, such as a car, truck, bus, van, motorcycle, bicycle; a movable structure or frame such as a stick, fishing pole; or a train), under the ground (e.g., a subway), in space (e.g., a spaceplane, a satellite, or a probe), or any combination of these environments. The moving object can be a vehicle, such as a vehicle described elsewhere herein. In some embodiments, the moving object can be carried by a living subject, or take off from a living subject, such as a human or an animal. Suitable animals can include avines, canines, felines, equines, bovines, ovines, porcines, delphines, rodents, or insects.

The moving object may be capable of moving freely within the environment with respect to six degrees of freedom (e.g., three degrees of freedom in translation and three degrees of freedom in rotation). Alternatively, the movement of the moving object can be constrained with respect to one or more degrees of freedom, such as by a predetermined path, track, or orientation. The movement can be actuated by any suitable actuation mechanism, such as an engine or a motor. The actuation mechanism of the moving object can be powered by any suitable energy source, such as electrical energy, magnetic energy, solar energy, wind energy, gravitational energy, chemical energy, nuclear energy, or any suitable combination thereof. The moving object may be self-propelled via a propulsion system, as described elsewhere herein. The propulsion system may optionally run on an energy source, such as electrical energy, magnetic energy, solar energy, wind energy, gravitational energy, chemical energy, nuclear energy, or any suitable combination thereof. Alternatively, the moving object may be carried by a living being.

In some instances, the moving object can be a vehicle. Suitable vehicles may include water vehicles, aerial vehicles, space vehicles, or ground vehicles. For example, aerial vehicles may be fixed-wing aircraft (e.g., airplane, gliders), rotary-wing aircraft (e.g., helicopters, rotorcraft), aircraft having both fixed wings and rotary wings, or aircraft having neither (e.g., blimps, hot air balloons). A vehicle can be self-propelled, such as self-propelled through the air, on or in water, in space, or on or under the ground. A self-propelled vehicle can utilize a propulsion system, such as a propulsion system including one or more engines, motors, wheels, axles, magnets, rotors, propellers, blades, nozzles, or any suitable combination thereof. In some instances, the propulsion system can be used to enable the moving object to take off from a surface, land on a surface, maintain its current position and/or orientation (e.g., hover), change orientation, and/or change position.

The moving object can be controlled remotely by a user or controlled locally by an occupant within or on the moving object. In some embodiments, the moving object is an unmanned moving object, such as a UAV. An unmanned moving object, such as a UAV, may not have an occupant onboard the moving object. The moving object can be controlled by a human or an autonomous control system (e.g., a computer control system), or any suitable combination thereof. The moving object can be an autonomous or semi-autonomous robot, such as a robot configured with an artificial intelligence.

The moving object can have any suitable size and/or dimensions. In some embodiments, the moving object may be of a size and/or dimensions to have a human occupant within or on the vehicle. Alternatively, the moving object may be of size and/or dimensions smaller than that capable of having a human occupant within or on the vehicle. The moving object may be of a size and/or dimensions suitable for being lifted or carried by a human. Alternatively, the moving object may be larger than a size and/or dimensions suitable for being lifted or carried by a human. In some instances, the moving object may have a maximum dimension (e.g., length, width, height, diameter, diagonal) of less than or equal to about: 2 cm, 5 cm, 10 cm, 50 cm, 1 m, 2 m, 5 m, or 10 m. The maximum dimension may be greater than or equal to about: 2 cm, 5 cm, 10 cm, 50 cm, 1 m, 2 m, 5 m, or 10 m. For example, the distance between shafts of opposite rotors of the moving object may be less than or equal to about: 2 cm, 5 cm, 10 cm, 50 cm, 1 m, 2 m, 5 m, or 10 m. Alternatively, the distance between shafts of opposite rotors may be greater than or equal to about: 2 cm, 5 cm, 10 cm, 50 cm, 1 m, 2 m, 5 m, or 10 m.

In some embodiments, the moving object may have a volume of less than 100 cm x 100 cm x 100 cm, less than 50 cm x 50 cm x 30 cm, or less than 5 cm x 5 cm x 3 cm. The total volume of the moving object may be less than or equal to about: $1 cm^3$, $2 cm^3$, $5 cm^3$, $10 cm^3$, $20 cm^3$, $30 cm^3$, $40 cm^3$, $50 cm^3$, $60 cm^3$, $70 cm^3$, $80 cm^3$, $90 cm^3$ , $100 cm^3$, $150 cm^3$, $200 cm^3$, $300 cm^3$, $500 cm^3$, $750 cm^3$, $1000 cm^3$, $5000 cm^3$, $10,000 cm^3$, $100,000 cm^3$, $1 m^3$, or $10 m^3$. Conversely, the total volume of the moving object may be greater than or equal to about: $1 cm^3$, $2 cm^3$, $5 cm^3$, $10 cm^3$, $20 cm^3$, $30 cm^3$, $40 cm^3$, $50 cm^3$, $60 cm^3$, $70 cm^3$, $80 cm^3$, $90 cm^3$, $100 cm^3$, $150 cm^3$, $200 cm^3$, $300 cm^3$, $500 cm^3$, $750 cm^3$, $1000 cm^3$, $5000 cm^3$, $10,000 cm^3$, $100,000 cm^3$, $1 m^3$, or $10 m^3$.

In some embodiments, the moving object may have a footprint (which may refer to the lateral cross-sectional area encompassed by the moving object) less than or equal to about: $32,000 cm^2$, $20,000 cm^2$, $10,000 cm^2$, $1,000 cm^2$, $500 cm^2$, $100 cm^2$, $50 cm^2$, $10 cm^2$, or $5 cm^2$. Conversely, the footprint may be greater than or equal to about: $32,000 cm^2$, $20,000 cm^2$, $10,000 cm^2$, $1,000 cm^2$, $500 cm^2$, $100 cm^2$, $50 cm^2$, $10 cm^2$, or $5 cm^2$.

In some instances, the moving object may weigh no more than 1000 kg. The weight of the moving object may be less than or equal to about: 1000 kg, 750 kg, 500 kg, 200 kg, 150 kg, 100 kg, 80 kg, 70 kg, 60 kg, 50 kg, 45 kg, 40 kg, 35 kg, 30 kg, 25 kg, 20 kg, 15 kg, 12 kg, 10 kg, 9 kg, 8 kg, 7 kg, 6 kg, 5 kg, 4 kg, 3 kg, 2 kg, 1 kg, 0.5 kg, 0.1 kg, 0.05 kg, or 0.01 kg. Conversely, the weight may be greater than or equal to about: 1000 kg, 750 kg, 500 kg, 200 kg, 150 kg, 100 kg, 80 kg, 70 kg, 60 kg, 50 kg, 45 kg, 40 kg, 35 kg, 30 kg, 25 kg, 20 kg, 15 kg, 12 kg, 10 kg, 9 kg, 8 kg, 7 kg, 6 kg, 5 kg, 4 kg, 3 kg, 2 kg, 1 kg, 0.5 kg, 0.1 kg, 0.05 kg, or 0.01 kg.

In some embodiments, a moving object may be small relative to a load carried by the moving object. The load may include a payload and/or a carrier, as described in further detail elsewhere herein. In some examples, a ratio of a moving object weight to a load weight may be greater than, less than, or equal to about 1:1. In some instances, a ratio of a moving object weight to a load weight may be greater than, less than, or equal to about 1:1. Optionally, a ratio of a carrier weight to a load weight may be greater than, less than, or equal to about 1:1. When desired, the ratio of an moving object weight to a load weight may be less than or equal to: 1:2, 1:3, 1:4, 1:5, 1:10, or even less. Conversely, the ratio of a moving object weight to a load weight can also be greater than or equal to: 2:1, 3:1, 4:1, 5:1, 10:1, or even greater.

In some embodiments, the moving object may have low energy consumption. For example, the moving object may use less than about: 5 W/h, 4 W/h, 3 W/h, 2 W/h, 1 W/h, or less. In some instances, a carrier of the moving object may have low energy consumption. For example, the carrier may use less than about: 5 W/h, 4 W/h, 3 W/h, 2 W/h, 1 W/h, or less. Optionally, a payload of the moving object may have low energy consumption, such as less than about: 5 W/h, 4 W/h, 3 W/h, 2 W/h, 1 W/h, or less.

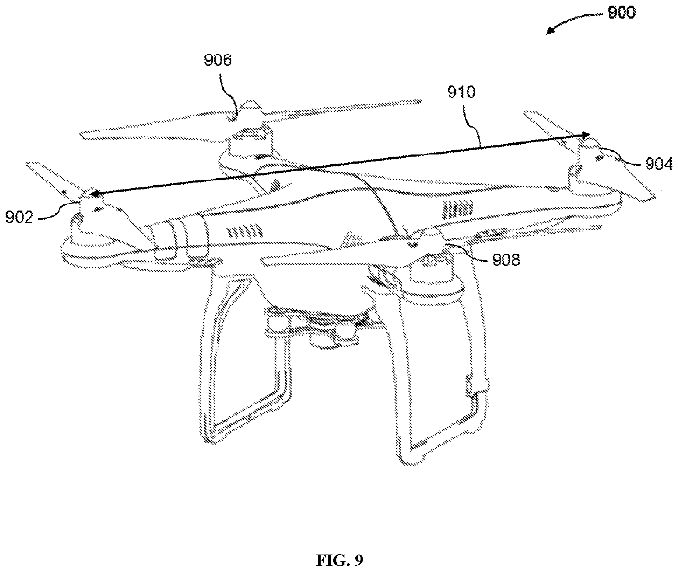

**FIG. 9** illustrates an unmanned aerial vehicle (UAV) **900,** in accordance with embodiments of the present invention. The UAV may be an example of a moving object as described herein. The UAV **900** can include a propulsion system having four rotors **902, 904, 906,** and **908.** Any number of rotors may be provided (e.g., one, two, three, four, five, six, or more). The rotors, rotor assemblies, or other propulsion systems of the unmanned aerial vehicle may enable the unmanned aerial vehicle to hover/maintain position, change orientation, and/or change location. The distance between shafts of opposite rotors can be any suitable length **910.** For example, the length **910** can be less than or equal to 2 m, or less than equal to 11 m. In some embodiments, the length **910** can be within a range from 40 cm to 7 m, from 70 cm to 2 m, or from 11 cm to 11 m. Any description herein of a UAV may apply to a moving object, such as a moving object of a different type, and vice versa. The UAV may use an assisted takeoff system or method as described herein.

In some embodiments, the moving object can be configured to carry a load. The load can include one or more of passengers, cargo, equipment, instruments, and the like. The load can be provided within a housing. The housing may be separate from a housing of the moving object, or be part of a housing for an moving object. Alternatively, the load can be provided with a housing while the moving object does not have a housing. Alternatively, portions of the load or the entire load can be provided without a housing. The load can be rigidly fixed relative to the moving object. Optionally, the load can be movable relative to the moving object (e.g., translatable or rotatable relative to the moving object). The load can include a payload and/or a carrier, as described elsewhere herein.

In some embodiments, the movement of the moving object, carrier, and payload relative to a fixed reference frame (e.g., the surrounding environment) and/or to each other, can be controlled by a terminal. The terminal can be a remote control device at a location distant from the moving object, carrier, and/or payload. The terminal can be disposed on or affixed to a support platform. Alternatively, the terminal can be a handheld or wearable device. For example, the terminal can include a smartphone, tablet, laptop, computer, glasses, gloves, helmet, microphone, or suitable combinations thereof. The terminal can include a user interface, such as a keyboard, mouse, joystick, touchscreen, or display. Any suitable user input can be used to interact with the terminal, such as manually entered commands, voice control, gesture control, or position control (e.g., via a movement, location or tilt of the terminal).

The terminal can be used to control any suitable state of the moving object, carrier, and/or payload. For example, the terminal can be used to control the position and/or orientation of the moving object, carrier, and/or payload relative to a fixed reference from and/or to each other. In some embodiments, the terminal can be used to control individual elements of the moving object, carrier, and/or payload, such as the actuation assembly of the carrier, a sensor of the payload, or an emitter of the payload. The terminal can include a wireless communication device adapted to communicate with one or more of the moving object, carrier, or payload.

The terminal can include a suitable display unit for viewing information of the moving object, carrier, and/or payload. For example, the terminal can be configured to display information of the moving object, carrier, and/or payload with respect to position, translational velocity, translational acceleration, orientation, angular velocity, angular acceleration, or any suitable combinations thereof. In some embodiments, the terminal can display information provided by the payload, such as data provided by a functional payload (e.g., images recorded by a camera or other image capturing device).

Optionally, the same terminal may both control the moving object, carrier, and/or payload, or a state of the moving object, carrier and/or payload, as well as receive and/or display information from the moving object, carrier and/or payload. For example, a terminal may control the positioning of the payload relative to an environment, while displaying image data captured by the payload, or information about the position of the payload. Alternatively, different terminals may be used for different functions. For example, a first terminal may control movement or a state of the moving object, carrier, and/or payload while a second terminal may receive and/or display information from the moving object, carrier, and/or payload. For example, a first terminal may be used to control the positioning of the payload relative to an environment while a second terminal displays image data captured by the payload. Various communication modes may be utilized between a moving object and an integrated terminal that both controls the moving object and receives data, or between the moving object and multiple terminals that both control the moving object and receives data. For example, at least two different communication modes may be formed between the moving object and the terminal that both controls the moving object and receives data from the moving object.

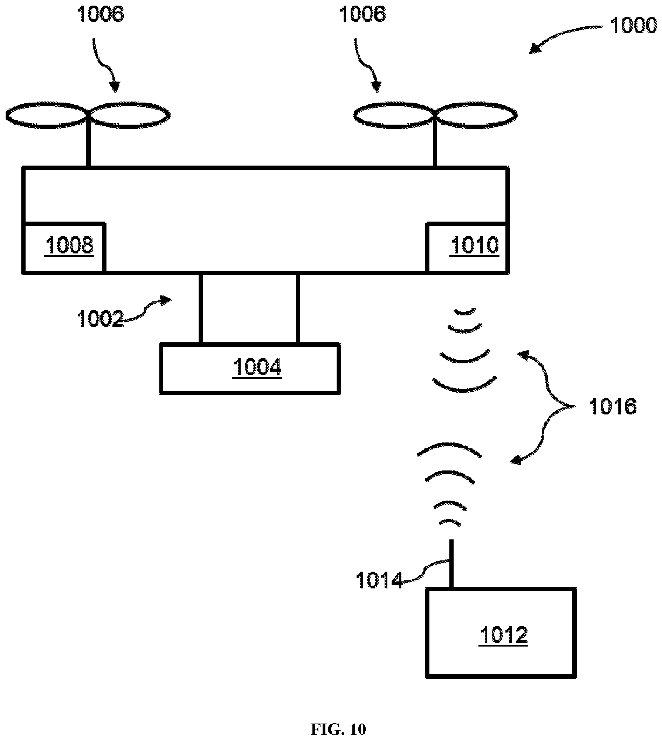

**FIG. 10** illustrates a UAV **1000** including a carrier **1002** and a payload **1004,** in accordance with embodiments. Although the moving object **1000** is depicted as an aircraft, this depiction is not intended to be limiting, and any suitable type of moving vehicle can be used, as previously described herein. One of skill in the art would appreciate that any of the embodiments described herein in the context of UAVs can be applied to any suitable moving object. In some instances, the payload **1004** may be provided on the UAV **1000** without requiring the carrier **1002.** The moving object **1000** may include propulsion mechanisms **1006,** a sensing system **1008,** and a communication system **1010.**

The propulsion mechanisms **1006** can include one or more of rotors, propellers, blades, engines, motors, wheels, axles, magnets, or nozzles, as previously described. The moving object may have one or more, two or more, three or more, or four or more propulsion mechanisms. The propulsion mechanisms may all be of the same type. Alternatively, one or more propulsion mechanisms can be different types of propulsion mechanisms. The propulsion mechanisms **1006** can be mounted on the UAV **1000** using any suitable means, such as a support element (e.g., a drive shaft) as described elsewhere herein. The propulsion mechanisms **1006** can be mounted on any suitable portion of the UAV **1000,** such on the top, bottom, front, back, sides, or suitable combinations thereof.

In some embodiments, the propulsion mechanisms **1006** can enable the UAV **1000** to take off vertically from a surface or land vertically on a surface without requiring any horizontal movement of the UAV **1000** (e.g., without traveling down a runway). Optionally, the propulsion mechanisms **1006** can be operable to permit the UAV **1000** to hover in the air at a specified position and/or orientation. One or more of the propulsion mechanisms **1000** may be controlled independently of the other propulsion mechanisms. Alternatively, the propulsion mechanisms **1000** can be configured to be controlled simultaneously. For example, the UAV **1000** can have multiple horizontally oriented rotors that can provide lift and/or thrust to the UAV. The multiple horizontally oriented rotors can be actuated to provide vertical takeoff, vertical landing, and hovering capabilities to the UAV **1000.** In some embodiments, one or more of the horizontally oriented rotors may spin in a clockwise direction, while one or more of the horizontally rotors may spin in a counterclockwise direction. For example, the number of clockwise rotors may be equal to the number of counterclockwise rotors. The rotation rate of each of the horizontally oriented rotors can be varied independently in order to control the lift and/or thrust produced by each rotor, and thereby adjust the spatial disposition, velocity, and/or acceleration of the UAV **1000** (e.g., with respect to up to three degrees of translation and up to three degrees of rotation).

The sensing system **1008** can include one or more sensors that may sense the spatial disposition, velocity, and/or acceleration of the UAV **1000** (e.g., with respect to up to three degrees of translation and up to three degrees of rotation). The one or more sensors can include global positioning system (GPS) sensors, motion sensors, inertial sensors, proximity sensors, or image sensors. The sensing data provided by the sensing system **1008** can be used to control the spatial disposition, velocity, and/or orientation of the UAV **1000** (e.g., using a suitable processing unit and/or control module, as described below). Alternatively, the sensing system **1008** can be used to provide data regarding the environment surrounding the UAV, such as weather conditions, proximity to potential obstacles, location of geographical features, location of manmade structures, and the like.

The communication system **1010** enables communication with terminal 1012 having a communication system **1014** via wireless signals **1016.** The communication systems **1010, 1014** may include any number of transmitters, receivers, and/or transceivers suitable for wireless communication. The communication may be one-way communication, such that data can be transmitted in only one direction. For example, one-way communication may involve only the UAV **1000** transmitting data to the terminal **1012,** or vice-versa. The data may be transmitted from one or more transmitters of the communication system **1010** to one or more receivers of the communication system **1012,** or vice-versa. Alternatively, the communication may be two-way communication, such that data can be transmitted in both directions between the UAV **1000** and the terminal **1012.** The two-way communication can involve transmitting data from one or more transmitters of the communication system **1010** to one or more receivers of the communication system **1014,** and vice-versa.

In some embodiments, the terminal **1012** can provide control data to one or more of the UAV **1000,** carrier **1002,** and payload **1004** and receive information from one or more of the UAV **1000,** carrier **1002,** and payload **1004** (e.g., position and/or motion information of the UAV, carrier or payload; data sensed by the payload such as image data captured by a payload camera). In some instances, control data from the terminal may include instructions for relative positions, movements, actuations, or controls of the UAV, carrier and/or payload. For example, the control data may result in a modification of the location and/or orientation of the UAV (e.g., via control of the propulsion mechanisms **1006**), or a movement of the payload with respect to the UAV (e.g., via control of the carrier **1002**). The control data from the terminal may result in control of the payload, such as control of the operation of a camera or other image capturing device (e.g., taking still or moving pictures, zooming in or out, turning on or off, switching imaging modes, change image resolution, changing focus, changing depth of field, changing exposure time, changing viewing angle or field of view). In some instances, the communications from the UAV, carrier and/or payload may include information from one or more sensors (e.g., of the sensing system **1008** or of the payload **1004**). The communications may include sensed information from one or more different types of sensors (e.g., GPS sensors, motion sensors, inertial sensor, proximity sensors, or image sensors). Such information may pertain to the position (e.g., location, orientation), movement, or acceleration of the UAV, carrier and/or payload. Such information from a payload may include data captured by the payload or a sensed state of the payload. The control data provided transmitted by the terminal **1012** can be configured to control a state of one or more of the UAV **1000,** carrier **1002,** or payload **1004.** Alternatively or in combination, the carrier **1002** and payload **1004** can also each include a communication module configured to communicate with terminal **1012,** such that the terminal can communicate with and control each of the UAV **1000,** carrier **1002,** and payload **1004** independently.

In some embodiments, the UAV **1000** can be configured to communicate with another remote device in addition to the terminal **1012,** or instead of the terminal **1012.** The terminal **1012** may also be configured to communicate with another remote device as well as the UAV **1000.** For example, the UAV **1000** and/or terminal **1012** may communicate with another UAV, or a carrier or payload of another UAV. When desired, the remote device may be a second terminal or other computing device (e.g., computer, laptop, tablet, smartphone, or other mobile device). The remote device can be configured to transmit data to the UAV **1000,** receive data from the UAV **1000,** transmit data to the terminal **1012,** and/or receive data from the terminal **1012.** Optionally, the remote device can be connected to the Internet or other telecommunications network, such that data received from the UAV **1000** and/or terminal **1012** can be uploaded to a website or server.

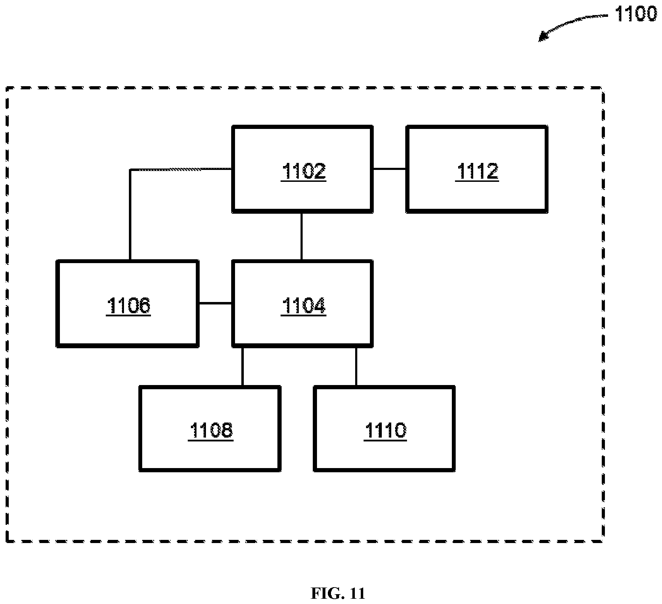

**FIG. 11** is a schematic illustration by way of block diagram of a system **1100** for controlling a UAV, in accordance with embodiments. The system **1100** can be used in combination with any suitable embodiment of the systems, devices, and methods disclosed herein. The system **1100** can include a sensing module **1102,** processing unit **1104,** non-transitory computer readable medium **1106,** control module **1108,** and communication module **1110.**

The sensing module **1102** can utilize different types of sensors that collect information relating to the UAVs in different ways. Different types of sensors may sense different types of signals or signals from different sources. For example, the sensors can include inertial sensors, GPS sensors, proximity sensors (e.g., lidar), or vision/image sensors (e.g., a camera). The sensing module **1102** can be operatively coupled to a processing unit **1104** having a plurality of processors. In some embodiments, the sensing module can be operatively coupled to a transmission module **1112** (e.g., a Wi-Fi image transmission module) configured to directly transmit sensing data to a suitable external device or system. For example, the transmission module **1112** can be used to transmit images captured by a camera of the sensing module **1102** to a remote terminal.

The processing unit **1104** can have one or more processors, such as a programmable processor (e.g., a central processing unit (CPU)). The processing unit **1104** can be operatively coupled to a non-transitory computer readable medium **1106.** The non-transitory computer readable medium **1106** can store logic, code, and/or program instructions executable by the processing unit **1104** for performing one or more steps. The non-transitory computer readable medium can include one or more memory units (e.g., removable media or external storage such as an SD card or random access memory (RAM)). In some embodiments, data from the sensing module **1102** can be directly conveyed to and stored within the memory units of the non-transitory computer readable medium **1106.** The memory units of the non-transitory computer readable medium **1106** can store logic, code and/or program instructions executable by the processing unit **1104** to perform any suitable embodiment of the methods described herein. For example, the processing unit **1104** can be configured to execute instructions causing one or more processors of the processing unit **1104** to analyze sensing data produced by the sensing module. The memory units can store sensing data from the sensing module to be processed by the processing unit **1104.** In some embodiments, the memory units of the non-transitory computer readable medium **1106** can be used to store the processing results produced by the processing unit **1104.**

In some embodiments, the processing unit **1104** can be operatively coupled to a control module **1108** configured to control a state of the UAV. For example, the control module **1108** can be configured to control the propulsion mechanisms of the UAV to adjust the spatial disposition, velocity, and/or acceleration of the UAV with respect to six degrees of freedom. Alternatively or in combination, the control module **1108** can control one or more of a state of a carrier, payload, or sensing module.

The processing unit **1104** can be operatively coupled to a communication module **1110** configured to transmit and/or receive data from one or more external devices (e.g., a terminal, display device, or other remote controller). Any suitable means of communication can be used, such as wired communication or wireless communication. For example, the communication module **1110** can utilize one or more of local area networks (LAN), wide area networks (WAN), infrared, radio, WiFi, point-to-point (P2P) networks, telecommunication networks, cloud communication, and the like. Optionally, relay stations, such as towers, satellites, or mobile stations, can be used. Wireless communications can be proximity dependent or proximity independent. In some embodiments, line-of-sight may or may not be required for communications. The communication module **1110** can transmit and/or receive one or more of sensing data from the sensing module **1102,** processing results produced by the processing unit **1104,** predetermined control data, user commands from a terminal or remote controller, and the like.

The components of the system **1100** can be arranged in any suitable configuration. For example, one or more of the components of the system **1100** can be located on the UAV, carrier, payload, terminal, sensing system, or an additional external device in communication with one or more of the above. Additionally, although **FIG. 11** depicts a single processing unit **1104** and a single non-transitory computer readable medium **1106,** one of skill in the art would appreciate that this is not intended to be limiting, and that the system **1100** can include a plurality of processing units and/or non-transitory computer readable media. In some embodiments, one or more of the plurality of processing units and/or non-transitory computer readable media can be situated at different locations, such as on the UAV, carrier, payload, terminal, sensing module, additional external device in communication with one or more of the above, or suitable combinations thereof, such that any suitable aspect of the processing and/or memory functions performed by the system **1100** can occur at one or more of the aforementioned locations.

## Claims

1.  A method for controlling flight of an unmanned aerial vehicle, abbreviated UAV, said method comprising:

    obtaining information about a location of an object of interest (102, 600);
    calculating, during operation of the UAV, a flight-restricted distance for the UAV to maintain relative to the object of interest (102, 600), wherein the flight-restricted distance is calculated based on a safety factor, wherein the safety factor is determined based on an object classification, wherein the object classification is indicative of a movement characteristic of the object of interest (102, 600), and wherein a greater value to the safety factor results in a greater flight-restricted distance; and
    controlling flight of the UAV to maintain the flight-restricted distance relative to the object of interest (102, 600).

2.  The method of claim 1, wherein the object classification is indicative of a type of object of interest, wherein the type of object of interest (102, 600) is selected from a plurality of types of objects of interest.

3.  The method of claim 2, wherein the plurality of types of objects of interest comprise stationary objects and moving objects (702), or wherein the plurality of types of objects of interest comprise types of structures or types of vehicles.

4.  The method of claim 1, wherein the safety factor corresponds to the object of interest's (102, 600) speed capability.

5.  The method of claim 1, wherein the object classification is indicative of a priority associated with the object of interest (102, 600),

wherein the safety factor corresponds to the priority.

6. The method of claim 1, wherein the flight-restricted distance is calculated as a weighted sum of one or more of:

   (i) a distance safety margin;
   (ii) a maximum deviation in the UAV's location data;
   (iii) a maximum deviation in the object of interest's (102, 600) location data;
   (iv) a required minimum distance between the UAV and the object of interest (102, 600); and
   (v) a braking distance needed to stop the UAV.

7. The method of claim 1, wherein the flight-restricted distance is a flight-restricted height for the UAV to maintain relative to the object of interest (102, 600), wherein the safety factor is a height safety factor determined based on the object classification.

8. The method of claim 7, wherein the flight-restricted height is calculated as a weighted sum of one or more of:

   (i) a height safety margin;
   (ii) a maximum deviation in the UAV's height data;
   (iii) a maximum deviation in the object of interest's (102, 600) height data;
   (iv) a required minimum height distance between the UAV and the object of interest (102, 600); and
   (v) a braking height distance needed to stop the UAV.

9. The method of claim 1, wherein the information about the location of the object of interest (102, 600) is broadcast from the object of interest (102, 600) at one or more time points.

10. The method of claim 1, wherein the information about the location of the object of interest (102, 600) comprises one or more of: latitude, longitude, altitude, speed, and direction, said information associated with the location of the object of interest (102, 600) at a time point.

11. The method of claim 1, wherein the step of calculating is performed by one or more processors on-board the UAV.

12. The method of claim 1, wherein the object of interest (102, 600) is a moving object with a speed relative to the ground.

13. The method of claim 1, wherein the step of maintaining the flight-restricted distance relative to the object of interest (102, 600) comprises obtaining information about a location of the UAV.

14. The method of claim 1, wherein the step of controlling flight of the UAV comprises performing a flight response measure,
    wherein the flight response measure is selected from the group consisting of: changing speed, changing direction, changing acceleration, changing altitude, landing, and returning to a predetermined location.

15. An apparatus for controlling flight of an unmanned aerial vehicle, abbreviated UAV, said apparatus comprising: one or more processors configured to:

    obtain information about a location of an object of interest (102, 600); calculate, during operation of the UAV, a flight-restricted distance for the UAV to maintain relative to the object of interest (102, 600), wherein the flight-restricted distance is calculated based on a safety factor, wherein the safety factor is determined based on an object classification, wherein the object classification is indicative of a movement characteristic of the object of interest (102, 600), and wherein a greater value to the safety factor results in a greater flight-restricted distance; and
    generate instructions that control flight of the UAV to maintain the flight-restricted distance relative to the object of interest (102, 600).

**Patentansprüche**

1. Verfahren zum Steuern des Flugs eines unbemannten Luftfahrzeugs, abgekürzt UAV, wobei das Verfahren Folgendes umfasst:

Erhalten von Informationen über einen Standort eines Objekts von Interesse (102, 600);

Berechnen eines Flugeinschränkungsabstands, der für das UAV relativ zum Objekt von Interesse (102, 600) einzuhalten ist, während des Betriebs des UAV, wobei der Flugeinschränkungsabstand auf Basis eines Sicherheitsfaktors berechnet wird, wobei der Sicherheitsfaktor auf Basis einer Objektklassifizierung bestimmt wird, wobei die Objektklassifizierung eine Bewegungscharakteristik für das Objekt von Interesse (102, 600) angibt, und wobei ein größerer Wert des Sicherheitsfaktors in einem größeren Flugeinschränkungsabstand resultiert; und

Steuern des Flugs des UAV, um den Flugeinschränkungsabstand relativ zum Objekt von Interesse (102, 600) einzuhalten.

2. Verfahren nach Anspruch 1, wobei die Objektklassifizierung einen Typ eines Objekts von Interesse anzeigt, wobei der Typ eines Objekts von Interesse (102, 600) aus einer Vielzahl von Typen von Objekten von Interesse ausgewählt wird.

3. Verfahren nach Anspruch 2, wobei die Vielzahl von Typen von Objekten von Interesse stationäre Objekte und sich bewegende Objekte (702) umfassen oder

wobei die Vielzahl von Typen von Objekten von Interesse Typen von Strukturen oder Typen von Fahrzeugen umfassen.

4. Verfahren nach Anspruch 1,
wobei der Sicherheitsfaktor dem Geschwindigkeitsvermögen des Objekts von Interesse (102, 600) entspricht.

5. Verfahren nach Anspruch 1, wobei die Objektklassifizierung eine Priorität, die mit dem Objekt von Interesse (102, 600) verknüpft ist, anzeigt, wobei der Sicherheitsfaktor der Priorität entspricht.

6. Verfahren nach Anspruch 1, wobei der Flugeinschränkungsabstand als eine gewichtete Summe von einem oder mehreren von Folgendem berechnet wird:

(i) einer Abstandssicherheitsmarge;
(ii) einer maximalen Abweichung in den Standortdaten des UAV;
(iii) einer maximalen Abweichung in den Standortdaten des Objekts von Interesse (102, 600);
(iv) einem erforderlichen Mindestabstand zwischen dem UAV und dem Objekt von Interesse (102, 600) und
(v) einem Bremsabstand, der zum Stoppen des UAV erforderlich ist.

7. Verfahren nach Anspruch 1, wobei der Flugeinschränkungsabstand eine Flugeinschränkungshöhe für das UAV ist, um relativ zum Objekt von Interesse (102, 600) zu verbleiben, wobei der Sicherheitsfaktor ein Höhensicherheitsfaktor ist, der auf Basis der Objektklassifizierung bestimmt wird.

8. Verfahren nach Anspruch 7, wobei die Flugeinschränkungshöhe als eine gewichtete Summe von einem oder mehreren von Folgendem berechnet wird:

(i) einer Höhensicherheitsmarge;
(ii) einer maximalen Abweichung in den Höhendaten des UAV;
(iii) einer maximalen Abweichung in den Höhendaten des Objekts von Interesse (102, 600);
(iv) einem erforderlichen Mindesthöhenabstand zwischen dem UAV und dem Objekt von Interesse (102, 600) und
(v) einem Bremshöhenabstand, der zum Stoppen des UAV erforderlich ist.

9. Verfahren nach Anspruch 1, wobei die Informationen über den Standort des Objekts von Interesse (102, 600) zu einem oder mehreren Zeitpunkten vom Objekt von Interesse (102, 600) rundgesendet werden.

10. Verfahren nach Anspruch 1, wobei die Informationen über den Standort des Objekts von Interesse (102, 600) eines oder mehreres von Folgendem umfassen: Breitengrad, Längengrad, Höhe, Geschwindigkeit und Richtung, wobei die Informationen zu einem Zeitpunkt mit dem Standort des Objekts von Interesse (102, 600) verknüpft sind.

11. Verfahren nach Anspruch 1, wobei der Schritt des Berechnens von einem oder mehreren Prozessoren an Bord des UAV durchgeführt wird.

**12.** Verfahren nach Anspruch 1, wobei das Objekt von Interesse (102, 600) ein sich bewegendes Objekt mit einer Geschwindigkeit relativ zum Boden ist.

**13.** Verfahren nach Anspruch 1, wobei der Schritt des Einhaltens des Flugeinschränkungsabstands relativ zum Objekt von Interesse (102, 600) das Erhalten von Informationen über einen Standort des UAV umfasst.

**14.** Verfahren nach Anspruch 1, wobei der Schritt des Steuerns des Flugs des UAV das Durchführen einer Flugreaktionsmaßnahme umfasst,
wobei die Flugreaktionsmaßnahme aus der Gruppe ausgewählt wird, die aus Folgendem besteht: Ändern der Geschwindigkeit, Ändern der Richtung, Ändern der Beschleunigung, Ändern der Höhe, Landen und Zurückkehren zu einem vorbestimmten Standort.

**15.** Einrichtung zum Steuern des Flugs eines unbemannten Luftfahrzeugs, abgekürzt UAV, wobei die Einrichtung Folgendes umfasst:
einen oder mehrere Prozessoren, die zu Folgendem ausgelegt sind:

Erhalten von Informationen über einen Standort eines Objekts von Interesse (102, 600);
Berechnen eines Flugeinschränkungsabstands, der für das UAV relativ zum Objekt von Interesse (102, 600) einzuhalten ist, während des Betriebs des UAV, wobei der Flugeinschränkungsabstand auf Basis eines Sicherheitsfaktors berechnet wird, wobei der Sicherheitsfaktor auf Basis einer Objektklassifizierung bestimmt wird, wobei die Objektklassifizierung eine Bewegungscharakteristik für das Objekt von Interesse (102, 600) angibt, und wobei ein größerer Wert des Sicherheitsfaktors in einem größeren Flugeinschränkungsabstand resultiert; und
Erzeugen von Anweisungen, die den Flug des UAV steuern, um den Flugeinschränkungsabstand relativ zum Objekt von Interesse (102, 600) einzuhalten.

**Revendications**

**1.** Procédé de commande de vol d'un véhicule aérien sans pilote, « UAV » en abrégé, ledit procédé comprenant les étapes ci-dessous consistant à :

obtenir des informations concernant un emplacement d'un objet d'intérêt (102, 600) ;
calculer, pendant le fonctionnement du véhicule UAV, une distance de vol limitée que le véhicule UAV doit maintenir par rapport à l'objet d'intérêt (102, 600), dans lequel la distance de vol limitée est calculée sur la base d'un facteur de sécurité, dans lequel le facteur de sécurité est déterminé sur la base d'une classification d'objet, dans lequel la classification d'objet est indicative d'une caractéristique de mouvement de l'objet d'intérêt (102, 600), et dans lequel une valeur plus élevée du facteur de sécurité se traduit par une distance de vol limitée plus grande ; et
commander le vol du véhicule UAV pour maintenir la distance de vol limitée par rapport à l'objet d'intérêt (102, 600).

**2.** Procédé selon la revendication 1, dans lequel la classification d'objet est indicative d'un type d'objet d'intérêt ;
dans lequel le type d'objet d'intérêt (102, 600) est sélectionné parmi une pluralité de types d'objets d'intérêt.

**3.** Procédé selon la revendication 2, dans lequel la pluralité de types d'objets d'intérêt comprend des objets fixes et des objets en mouvement (702) ; ou
dans lequel la pluralité de types d'objets d'intérêt comprend des types de structures ou des types de véhicules.

**4.** Procédé selon la revendication 1,
dans lequel le facteur de sécurité correspond à une capacité de vitesse de l'objet d'intérêt (102, 600).

**5.** Procédé selon la revendication 1, dans lequel la classification d'objet est indicative d'une priorité associée à l'objet d'intérêt (102, 600),
dans lequel le facteur de sécurité correspond à la priorité.

**6.** Procédé selon la revendication 1, dans lequel la distance de vol limitée est calculée en tant qu'une somme pondérée d'un ou plusieurs des éléments suivants, à savoir :

(i) une marge de sécurité en distance ;
(ii) un écart maximum dans les données de localisation du véhicule UAV ;
(iii) un écart maximum dans les données de localisation de l'objet d'intérêt (102, 600) ;
(iv) une distance minimale requise entre le véhicule UAV et l'objet d'intérêt (102, 600) ; et
(v) une distance de freinage nécessaire pour immobiliser le véhicule UAV.

7. Procédé selon la revendication 1, dans lequel la distance de vol limitée est une hauteur de vol limitée que le véhicule UAV doit maintenir par rapport à l'objet d'intérêt (102, 600), dans lequel le facteur de sécurité est un facteur de sécurité en hauteur déterminé sur la base de la classification d'objet.

8. Procédé selon la revendication 7, dans lequel la hauteur de vol limitée est calculée en tant qu'une somme pondérée d'un ou plusieurs des éléments suivants, à savoir :

(i) une marge de sécurité en hauteur ;
(ii) un écart maximum dans les données de hauteur du véhicule UAV ;
(iii) un écart maximum dans les données de hauteur de l'objet d'intérêt (102, 600) ;
(iv) une distance en hauteur minimale requise entre le véhicule UAV et l'objet d'intérêt (102, 600) ; et
(v) une distance en hauteur de freinage nécessaire pour immobiliser le véhicule UAV.

9. Procédé selon la revendication 1, dans lequel les informations concernant l'emplacement de l'objet d'intérêt (102, 600) sont diffusées à partir de l'objet d'intérêt (102, 600) à un ou plusieurs instants.

10. Procédé selon la revendication 1, dans lequel les informations concernant l'emplacement de l'objet d'intérêt (102, 600) comprennent une ou plusieurs des informations suivantes, à savoir : une latitude, une longitude, une altitude, une vitesse et une direction, lesdites informations étant associées à l'emplacement de l'objet d'intérêt (102, 600) à un instant donné.

11. Procédé selon la revendication 1, dans lequel l'étape de calcul est mise en oeuvre par un ou plusieurs processeurs à bord du véhicule UAV.

12. Procédé selon la revendication 1, dans lequel l'objet d'intérêt (102, 600) est un objet en mouvement avec une vitesse par rapport au sol.

13. Procédé selon la revendication 1, dans lequel l'étape consistant à maintenir la distance de vol limitée par rapport à l'objet d'intérêt (102, 600) comprend l'étape consistant à obtenir des informations concernant l'emplacement du véhicule UAV.

14. Procédé selon la revendication 1, dans lequel l'étape de commande du vol du véhicule UAV comprend l'étape consistant à mettre en oeuvre une mesure de réponse de vol ;
dans lequel la mesure de réponse de vol est sélectionnée à partir du groupe constitué par :
un changement de vitesse, un changement de direction, un changement d'accélération, un changement d'altitude, un atterrissage et un retour vers un emplacement prédéterminé.

15. Appareil destiné à commander un vol d'un véhicule aérien sans pilote, « UAV » en abrégé, ledit appareil comprenant :
un ou plusieurs processeurs configurés de manière à :

obtenir des informations concernant un emplacement d'un objet d'intérêt (102, 600) ;
calculer, pendant le fonctionnement du véhicule UAV, une distance de vol limitée que le véhicule UAV doit maintenir par rapport à l'objet d'intérêt (102, 600), dans lequel la distance de vol limitée est calculée sur la base d'un facteur de sécurité, dans lequel le facteur de sécurité est déterminé sur la base d'une classification d'objet, dans lequel la classification d'objet est indicative d'une caractéristique de mouvement de l'objet d'intérêt (102, 600), et dans lequel une valeur plus élevée du facteur de sécurité se traduit par une distance de vol limitée plus grande ; et
générer des instructions qui commandent le vol du véhicule UAV pour maintenir la distance de vol limitée par rapport à l'objet d'intérêt (102, 600).

**FIG. 1**

**FIG. 2**

**FIG. 3**

**FIG. 4**

data acquisition
at object

UAV response

t = 0

$t_1$

$t_2$

$t_3$

communication
between object
and UAV

**FIG. 5**

**FIG. 6**

**FIG. 7**

**FIG. 8**

**FIG. 9**

**FIG. 10**

1100

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016154936 A1